# EUROPÄISCHE PATENTSCHRIFT

(11) **EP 1 770 119 B1**
(45) Veröffentlichungstag und Bekanntmachung des Hinweises auf die Patenterteilung: **25.11.2009**
(21) Anmeldenummer: 06019724.1
(22) Anmeldetag: 21.09.2006
(51) Int. Cl.: C08K 5/098, C08L 13/00

(54) **Vernetzbare Exlastomerzusammensetzungen, Verfahren zu deren Herstellung und deren Verwendung**
Crosslinkabe elastomer compositions, process for preparation, and use thereof
Compositions élastomères réticulables, procédé de fabrication et leur utilisation

(30) Priorität: 30.09.2005 DE 102005047115
(43) Veröffentlichungstag der Anmeldung: 04.04.2007
(73) Patentinhaber: LANXESS Deutschland GmbH, 51369 Leverkusen (DE)
(72) Erfinder: Achten, Dirk, Dr., 50735 Köln (DE); Wrana, Claus, Dr., 51061 Köln (DE); Ong, Christopher, Dr., 51375 Leverkusen (DE); Mezger, Martin, Dr., 51399 Burscheid (DE); Magg, Hans, Dr., 51515 Kürten (DE); Ismeier, Jürgen, Dr., 85661 Forstinning (DE); Winkelbach, Hans-Rafael, Dr., 51399 Burscheid (DE)

(56) Entgegenhaltungen:
- DE-A1- 10 327 452
- US-A- 4 952 634
- US-A1- 2003 065 076
- US-A1- 2003 181 558

## Beschreibung

Die Erfindung betrifft vernetzbare Zusammensetzungen, welche Elastomere, die Carboxyl- und/oder Carboxylat-Gruppen aufweisen, sowie spezielle organische Salze von Metallionen und ein Vemetzungsssystem auf der Basis von Radikalspendern enthalten. Die Erfindung betrifft ferner die Herstellung solcher vernetzbaren Zusammensetzungen und deren Verwendung.

Es besteht eine Nachfrage nach flüssig verarbeitbaren, möglichst lösungsmittelfreien bzw. lösungsmittelarmen vulkanisierbaren Zusammensetzungen, die nach Aushärtung bzw. Vulkanisation die typische Eigenschaften von vulkanisierten Elastomeren aufweisen. Besonderer Bedarf besteht nach niedrigviskos verarbeitbaren Materialien, die nach Vulkanisation hohe Temperaturbeständigkeit und einstellbare physikalische Eigenschaften aufweisen und somit die Eigenschaften von gängigen flüssigverarbeitbaren Systemen wie Silikonkautschuken bzw. Polyurethanen mit den Eigenschaften von Hochleistungselastomeren wie zB. HNBR, EVM, ACM und AEM Kautschuken verbinden. Ebenfalls ein besonderes Bedürfnis besteht nach Materialien, die einerseits bei hohen Temperaturen oder bei hoher Scherung sehr niedrigviskos sind, andererseits bei Raumtemperatur aber mit einer ausreichenden Standfestigkeit versehen sind. Diese Eigenschaftskombination würde es erlauben, dass sie einerseits mit gängigen Methoden (Extrusion, Injektion, Kalandrierung, Pressen) zu bei Raumtemperatur kurzfristig formstabilen Körpern wie beispielsweise Fellen, Fütterstreifen oder Fütterkörpern geformt und als solche eingesetzt werden können, bei höheren Temperaturen aber niedrigviskos werden und dann typischerweise "flüssig" verarbeitet werden können.

Aufgabe der vorliegenden Erfindung war es somit, Zusammensetzungen bereitzustellen, die niedrige Viskositäten bei der Verarbeitungstemperatur, gleichzeitig Standfestigkeit bei Raumtemperatur sowie ferner eine hohe Temperaturbeständigkeit und ein hohes physikalisches Eigenschaftsniveau nach Vulkanisation aufweisen.

Überraschenderweise wurde gefunden, dass durch Kombination von Carboxyl- und/oder Carboxylat-Gruppen haltigen Elastomeren in einem definierten Viskositätsbereich mit speziellen ungesättigten Carbonsäuresalzen von Metallionen sowie einem radikalischen Vernetzungssystem vulkanisierbare Zusammensetzungen erhalten werden, die das gewünschte Eigenschaftsprofil besitzen, die erfindungsgemäße Aufgabe lösen und nach anschließender Vulkanisation der Elastomeren bzw. Polymerisation der ungesättigten Carbonsäuresalze zu Vulkanisaten führen, die die zuvor genannten Anforderungen erfüllen, indem sie gleichzeitig hochfeste und elastische Produkte darstellen, die eine hohe Haftwirkung zu Metallen und gängigen polaren Substraten wie Polyurethanen, Polyamiden, Polyestern, Polyethern, Polyepoxiden, Polyalkoholen, Polysäuren sowie Derivaten und Mischungen derselben aufweisen.

**Gegenstand der Erfindung** sind vernetzbare Zusammensetzungen enthaltend
(1) ein oder mehrere Elastomere, wobei mindestens eines davon Carboxyl- und/oder Carboxylat-Gruppen aufweist,
(2) ein oder mehrere verschiedene Salze der allgemeinen Formel (I)

   (R^{y-})_{x/y}M ^{x+} (I)

   worin
   - R^{y-}: ein α,β-ungesättigtes C₃-C₁₄-Carboxylat darstellt, welches y Carboxylatgruppen enthält,
   - y: die Werte 1, 2, 3, oder 4 darstellen kann,
   - x: 2, 3 oder 4 ist und
   - M: ein zwei-, drei- oder vierwertiges Metall ist und
(3) ein oder mehrere Vernetzer, die als Radikalspender fungieren,
dadurch gekennzeichnet, dass
(a) das Elastomer (1) oder, sofern mehrere Elastomere (1) eingesetzt werden, die Mischung aller Elastomere (1) zusammen eine Mooney-Viskosität (ML 1+4 bei 100°C), gemessen gemäß ASTM Norm D 1646, in einem Bereich von 1-35 besitzt und
(b) die vernetzbare Zusammensetzung
   (i) eine komplexe Viskosität η* gemessen in einem Rubber Process Analyser (RPA) bei 60°C, 1Hz und einer Amplitude von 10% größer 30.000 Pas besitzt,
   (ii) eine amplitudenabhängige Änderung der komplexen Viskosität gemessen im RPA bei 60°C als Verhältnis von η* (bei 1Hz und 10% Amplitude) zu η* (bei 1 Hz und 100% Amplitude) größer 1,4,
   (iii) eine temperaturabhängige Änderung der komplexen Viskosität gemessen im RPA als Verhältnis von η* (bei 60°C, 1Hz und 10% Amplitude) zu η* (bei 130°C, 1 Hz und 10% Amplitude) größer 6 und
   (iv) eine amplitudenabhängige Änderung der komplexen Viskosität gemessen im RPA bei 130°C als Verhältnis von η* (bei 1Hz und 10% Amplitude) zu η* (bei 1 Hz und 100% Amplitude) kleiner 1,5 besitzt,
   wobei die für die komplexe Viskosität (η*) in allen vorgenannten Fällen (i) - (iv) angegebenen Werte jeweils den mathematischen Betrag der komplexen Viskosität angeben.

Alle vorgenannten komplexen Viskositäten werden in einem Rubber Process Analyser (RPA 2000) der Firma Alpha Technologies unter den jeweils angegebenen Bedingungen gemessen. Die Rubber Process Analyser der Firma Alpha Technologies und deren Bedienung sind dem Fachmann eindeutig bekannt. Es handelt sich dabei um Schwingungsrheometer zur Untersuchung der viskoelastischen Eigenschaften und des Verarbeitungsverhaltens von Kautschukmischungen.

**Bevorzugt sind** vernetzbare Zusammensetzungen enthaltend
(1) 10-94 Gew.% eines oder mehrerer Elastomere, wobei mindestens eines davon Carboxyl- und/oder Carboxylat-Gruppen aufweist,
(2) 5-89 Gew.% eines oder mehrerer Salze der allgemeinen Formel (I)

   (R^{y-} )_{x/y} M ^{x+} (I)

   worin
   - R^{y-}: ein α,β-ungesättigtes C₃-C₁₄-Carboxylat darstellt, welches y Carboxylatgruppen enthält,
   - y: die Werte 1, 2, 3, oder 4 darstellen kann,
   - x: 2, 3 oder 4 ist und
   - M: ein zwei-, drei- oder vierwertiges Metall ist und
(3) 1-20 Gew.% eines oder mehrerer Vernetzer, die als Radikalspender fungieren,
wobei die Summe der Komponenten (1), (2) und (3) kleiner gleich 100 Gew.% ergibt,
dadurch gekennzeichnet, dass
(a) das Elastomer (1) oder, sofern mehrere Elastomere (1) eingesetzt werden, die Mischung aller Elastomere (1) zusammen eine Mooney-Viskosität (ML 1+4 bei 100°C), gemessen gemäß ASTM Norm D 1646, in einem Bereich von 1-35 besitzt und
(b) die vernetzbare Zusammensetzung
   (i) eine **komplexe Viskosität** η* gemessen in einem Rubber Process Analyser (RPA) bei 60°C, 1Hz und einer Amplitude von 10% größer 30.000 Pas besitzt,
   (ii) eine **amplitudenabhängige Änderung der komplexen Viskosität** gemessen im RPA bei 60°C als Verhältnis von η* (bei 1Hz und 10% Amplitude) zu η* (bei 1 Hz und 100% Amplitude) größer 1,4,
   (iii) eine **temperaturabhängige Änderung der komplexen Viskosität** gemessen im RPA als Verhältnis von η* (bei 60°C, 1Hz und 10% Amplitude) zu η* (bei 130°C, 1 Hz und 10% Amplitude) größer 6,
   (iv) eine **amplitudenabhängige Änderung der komplexen Viskosität** gemessen im RPA bei 130°C als Verhältnis von η* (bei 1Hz und 10% Amplitude) zu η* (bei 1 Hz und 100% Amplitude) kleiner 1,5 und
   wobei die für die komplexe Viskosität (η*) in allen vorgenannten Fällen (i) - (iv) angegebenen Werte jeweils den mathematischen Betrag der komplexen Viskosität angeben.

**Besonders bevorzugt sind** vernetzbare Zusammensetzungen enthaltend
(1) 30-84 Gew.% eines oder mehrerer Elastomere, wobei mindestens eines davon Carboxyl- und/oder Carboxylat-Gruppen aufweist,
(2) 14-68 Gew.% eines oder mehrerer Salze der allgemeinen Formel (I)

   (R^{y-})_{x/y}M ^{x+} (I)

   worin
   - R^{y-}: ein α,β-ungesättigtes C₃-C₁₄-Carboxylat darstellt, welches y Carboxylatgruppen enthält,
   - y: die Werte 1, 2, 3, oder 4 darstellen kann,
   - x: 2, 3 oder 4 ist und
   - M: ein zwei-, drei- oder vierwertiges Metall ist und
(3) 2-15 Gew.% eines oder mehrerer Vernetzer als Radikalspender,
wobei die Summe der Komponenten (1), (2) und (3) kleiner gleich 100 Gew.% ergibt,
dadurch gekennzeichnet, dass
(a) das Elastomer (1) oder, sofern mehrere Elastomere (1) eingesetzt werden, die Mischung aller Elastomere (1) zusammen eine Mooney-Viskosität (ML 1+4 bei 100°C), gemessen gemäß ASTM Norm D 1646, in einem Bereich von 1-35 besitzt und
(b) die vernetzbare Zusammensetzung
   (i) eine **komplexe Viskosität** η* gemessen in einem Rubber Process Analyser (RPA) bei 60°C, 1Hz und einer Amplitude von 10% größer 30.000 Pas besitzt,
   (ii) eine **amplitudenabhängige Änderung der komplexen Viskosität** gemessen im RPA bei 60°C als Verhältnis von η* (bei 1Hz und 10% Amplitude) zu η* (bei 1 Hz und 100% Amplitude) größer 1,4,
(c) eine **temperaturabhängige Änderung** der **komplexen Viskosität** gemessen im RPA als Verhältnis von η* (bei 60°C, 1Hz und 10% Amplitude) zu η* (bei 130°C, 1 Hz und 10% Amplitude) größer 6,
(d) eine **amplitudenabhängige Änderung** der **komplexen Viskosität** gemessen im RPA bei 130°C als Verhältnis von η* (bei 1Hz und 10% Amplitude) zu η* (bei 1 Hz und 100% Amplitude) kleiner 1,5 und
wobei die für die komplexe Viskosität (η*) in allen vorgenannten Fällen angegebenen Werte jeweils den mathematischen Betrag der komplexen Viskosität angeben.

Optional können die erfindungsgemäßen vernetzbaren Zusammensetzungen in allen zuvor genannten Ausführungsformen als Komponente(n) (4) bis zu 84 Gew.%, bevorzugt 4-64 Gew.% und besonders bevorzugt 10-40 Gew.% ein oder mehrerer weiterer Hilfsstoffe enthalten, wie beispielsweise Füllstoffe, Fasern, Polymere, die nicht unter die erfindungsgemäße Elastomer(1)-Definition fallen, Öle, Stabilisatoren, Verarbeitungshilfsmittel, Weichmacher, zusätzliche polymerisierbare Monomere, Dimere, Trimere oder Oligomere, oder Vulkanisationsaktivatoren, wobei die Summe der Komponenten (1), (2), (3) und (4) 100 Gew.% ergibt.

Die erfindungsgemäßen vernetzbaren Zusammensetzungen zeichnen sich dadurch aus, dass sie in ihren Eigenschaften Newtonschen Flüssigkeiten ähneln. Das bedeutet, dass sie keine signifikante Änderung der komplexen Viskosität (hierfür wird im Rahmen dieser Anmeldung immer der mathematische Betrag der komplexen Viskosität angegeben) mit Scherung bei der Verarbeitungstemperatur (z.B. 130°C) zeigen. Bei Raumtemperatur zeigen vernetzbaren Zusammensetzungen jedoch deutlich höhere Viskosiäten als bei der Verarbeitungstemperatur und bei Scherung deutliches nicht-Newtonsches Verhalten, also einen Abbau der Viskosität mit Scherung.

Erfindungsgemäße vernetzbare Zusammensetzungen besitzen
(i) eine **komplexe Viskosität** η* gemessen in einem Rubber Process Analyser (RPA) bei 60°C, 1Hz und einer Amplitude von 10% von größer 30.000 Pas, bevorzugt von größer 40.000 Pas,
(ii) eine **amplitudenabhängige Änderung der komplexen Viskosität** gemessen im RPA bei 60°C als Verhältnis von η* (bei 1Hz und 10% Amplitude) zu η* (bei 1 Hz und 100% Amplitude) von größer 1,4, bevorzugt von größer 1,6,
(iii) eine **temperaturabhängige Änderung der komplexen Viskosität** gemessen im RPA als Verhältnis von η* (bei 60°C, 1Hz und 10% Amplitude) zu η* (bei 130°C, 1 Hz und 10% Amplitude) von größer 6, bevorzugt von größer 8,
(iv) eine **amplitudenabhängige Änderung der komplexen Viskosität** gemessen im RPA bei 130°C als Verhältnis von η* (bei 1Hz und 10% Amplitude) zu η* (bei 1 Hz und 100% Amplitude) von kleiner 1,5, bevorzugt von kleiner 1,4 und
wobei die für die komplexe Viskosität (η*) in allen vorgenannten Fällen (i) - (iv) angegebenen Werte jeweils den mathematischen Betrag der komplexen Viskosität angeben.

Der Wert von größer 1,4, bevorzugt von größer 1,6, für die **amplitudenabhängige Änderung der komplexen Viskosität (ii)** (Erniedrigung der Viskosität), gemessen im RPA bei 60°C als Verhältnis von η* (bei 1Hz und 10% Amplitude) zu η* (bei 1 Hz und 100% Amplitude), bedeutet, dass ein typisches Verhalten einer gefüllten Kautschukmischung mit nicht-Newtonschem Verhalten vorliegt.

Der Wert von größer 6, bevorzugt von größer 8, für die **temperaturabhängige Änderung der komplexen Viskosität (iii)** (Erniedrigung der Viskosität), gemessen im RPA als Verhältnis von η* (bei 60°C, 1Hz und 10% Amplitude) zu η* (bei 130°C, 1 Hz und 10% Amplitude), bedeutet, dass bei Erhöhung der Temperatur ein Übergang von nicht-Newtonschem zu annähernd Newtonschem Verhalten erfolgt.

Der Wert von kleiner 1,5, bevorzugt von kleiner 1,4, für die **amplitudenabhängige Änderung der komplexen Viskosität (iv)** (Erniedrigung der Viskosität), gemessen im RPA bei 130°C als Verhältnis von η* (bei 1Hz und 10% Amplitude) zu η* (bei 1 Hz und 100% Amplitude) bedeutet, dass bei der Verarbeitungstemperatur ein annähernd Newtonsches Verhalten gegeben ist.

Als **Elastomere (1)** können ein oder mehrere typische Elastomere eingesetzt werden.

Von entscheidender Bedeutung ist, dass mindestens eines der eingesetzten Elastomere an die Polymerketten gebundene Carboxyl- und/oder Carboxylat-Gruppen enthält.

Üblicherweise enthält das Elastomer (1) bzw. die Mischung der Elastomere (1), sofern mehrere Elastomere (1) eingesetzt werden, 0,5-15 Gew. %, bezogen auf 100 Gew.% des Elastomers (1) bzw. bezogen auf die gesamte Mischung der Elastomere (1), sofern mehrere Elastomere (1) eingesetzt werden, gebundener Carboxyl- und/oder Carboxylat-Gruppen.

Bevorzugt enthält das Elastomer (1) bzw. die Mischung der Elastomere (1), sofern mehrere Elastomere (1) eingesetzt werden, 0,5-10 Gew. %, besonders bevorzugt 1 - 7 Gew.% und insbesondere 1,5-6 Gew.%, bezogen auf 100 Gew.% des Elastomers (1) bzw. bezogen auf die gesamte Mischung der Elastomere (1), sofern mehrere Elastomere (1) eingesetzt werden, gebundener Carboxyl- und/oder Carboxylat-Gruppen.

Diese Carboxyl- bzw. Carboxylat-Gruppen können dabei statistisch entlang der Polymerketten der Elastomeren verteilt sein oder aber sich auch an den Kettenenden befinden.

Als Carboxyl- und/oder Carboxylat-Gruppen-haltige Elastomere (1) kommen beispielsweise die folgenden in Frage:
1. Carboxylierter Nitrilkautschuk (auch als XNBR abgekürzt),
2. Hydrierter, carboxylierter Nitrilkautschuk (auch als HXNBR abgekürzt),
3. Maleinsäureanhydrid ("MAH") gepfropfte Kautschuke auf Basis von EPM, EPDM, HNBR, EVA, EVM, SBR, NR oder BR,
4. Carboxylierter Styrol-Butadienkautschuk (auch als XSBR abgekürzt),
5. AEM mit freien Carboxylgruppen,
6. ACM mit freien Carboxylgruppen
sowie beliebige Mischungen der zuvor genannten Polymere.

Die **Mooney-Viskosität** (ML 1+4 gemessen bei 100°C) des eingesetzten Elastomers (1) oder, sofern mehrere Elastomere (1) eingesetzt werden, der gesamten Mischung aller Elastomere (1) liegt in einem Bereich von 1-35, bevorzugt in einem Bereich von 2 bis 25, besonders bevorzugt in einem Bereich von 5 bis 20. Die Bestimmung der Mooney-Viskosität erfolgt dabei gemäß ASTM Norm D 1646.

Die genannten Elastomere sind teilweise kommerziell erhältlich, aber ferner in allen Fällen nach dem Fachmann über die Literatur zugängliche Herstellverfahren zugänglich.

Unter dem **carboxylierten Nitrilkautschuk (auch als XNBR bezeichnet)** werden Kautschuke verstanden, bei denen es sich um Terpolymere aus mindestens einem ungesättigten Nitril, mindestens einem konjugierten Dien und mindestens einem Carboxyl- und/oder Carboxylat-Gruppen enthaltenden weiteren Termonomeren handelt.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Das **konjugierte Dien** kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **Carboxyl- und/oder Carboxylat-Gruppen enthaltende Monomere** können beispielsweise α,β-ungesättigte Carbonsäuren oder deren Ester eingesetzt werden. Bevorzugt sind dabei Fumarsäure, Maleinsäure, Acrylsäure und Methacrylsäure als Säuren sowie deren Estern. Als Ester kommen beispielsweise die Methyl-, Ethyl-, Propyl-, Isopropyl-, n-Butyl, iso-Butyl-, n-Hexyl-, 2-Ethylhexyl-Halbester von Fumarsäure und/oder Maleinsäure und/oder die Methyl-, Ethyl-, Propyl-, Isopropyl-, n-Butyl-, iso-Butyl-, n-Hexyl-, 2-Ethylhexyl-Ester von Acrylsäure und/oder Methacrylsäure in Frage. Andere **Carboxyl- und/oder Carboxylat-Gruppen enthaltende Monomere,** die eingesetzt werden können, sind ungesättigte Dicarbonsäuren oder Derivate davon, wie Ester, Amide oder Anhydride wie z.B. Maleinsäureanhydrid.

Bei den carboxylierten Nitrilkautschuken kann es sich um Polymere handeln, welche entweder ein oder mehrere, Carboxyl-Gruppen enthaltende Monomere oder ein oder mehrere, Carboxylat-Gruppen enthaltende Monomere aufweisen. Es kann sich aber auch um Polymere handeln, welche gleichzeitig ein oder mehrere, Carboxyl-Gruppen enthaltende Monomere und ein oder mehrere, Carboxylat-Gruppen enthaltende Monomer aufweisen.

Geeignet sind beispielsweise Polymere aus Butadien und Acrylnitril und Acrylsäure und/oder Methacrylsäure und/oder Fumarsäure und/oder Maleinsäure und/oder den Methyl-, Ethyl-, Propyl-, Isopropyl-, n-Butyl, iso-Butyl-, n-Hexyl- sowie 2-Ethylhexyl-Halbestern von Fumarsäure und/oder Maleinsäure und/oder den Methyl-, Ethyl-, Propyl-, Isopropyl-,n-Butyl-, iso-Butyl-, n-Hexyl- sowie 2-Ethylhexyl-Estern von Acrylsäure und/oder Methacrylsäure.

Bevorzugt sind beispielsweise Polymere aus Butadien und Acrylnitril und einem Carboxyl-Gruppen enthaltenden Monomer, inbesondere Fumarsäure, Maleinsäure, Acrylsäure oder Methacrylsäure.

Bevorzugt sind ferner auch Polymere aus Butadien und Acrylnitril und einem Carboxyl-Gruppen enthaltenden Monomer, inbesondere Fumarsäure, Maleinsäure, Acrylsäure oder Methacrylsäure, und einem Carboxylat-Gruppen enthaltenden Monomer, inbesondere dem Methyl-, Ethyl-, Propyl-, Isopropyl-, n-Butyl, iso-Butyl-, n-Hexyl- oder 2-Ethylhexyl-Halbester von Fumarsäure oder Maleinsäure oder dem Methyl-, Ethyl-, Propyl-, Isopropyl-, n-Butyl-, iso-Butyl-, n-Hexyl- oder 2-Ethylhexyl-Ester von Acrylsäure oder Methacrylsäure.

Die Anteile an konjugiertem Dien und α,β-ungesättigtem Nitril in den XNBR-Polymeren können in weiten Bereichen schwanken. Der Anteil des oder der Summe der konjugierten Diene liegt üblicherweise im Bereich von 40 bis 90 Gew.% und bevorzugt im Bereich von 55 bis 75 Gew. %, bezogen auf das Gesamtpolymer. Der Anteil des oder der Summe der α,β-ungesättigten Nitrile liegt üblicherweise bei 9,9 bis 60 Gew.-%, bevorzugt bei 15 bis 50 Gew.-%, bezogen auf das Gesamtpolymer. Die zusätzlichen Monomere liegen in Mengen von 0,1 bis 40 Gew.%, bevorzugt 1 bis 30 Gew.-%, bezogen auf das Gesamtpolymer, vor. Die Anteile aller Monomere summieren sich jeweils zu 100 Gew.% auf.

Die Herstellung von XNBR durch Polymerisation der vorgenannten Monomere ist dem Fachmann hinlänglich bekannt und in der Literatur (z.B. EP-A-0 933 381 oder US-A-5,157,083; Nippon Zeon) umfangreich beschrieben.

Um besonders niederviskose Typen des XNBR zu erzielen, hat es sich bewährt, ein Ausgangs-XNBR durch literaturbekannte Metathese-Reaktion einem Molekulargewichtsabbau zu unterziehen.

**Hydrierte carboxylierte Nitrilkautschuke (auch als HXNBR abgekürzt)** sind auf verschiedenen Wegen zugänglich:

Möglich ist es beispielsweise, ein HNBR mit Carboxylgruppen-haltigen Verbindungen zu pfropfen.

Sie können ferner durch Hydrierung der zuvor beschriebenen **carboxylierten Nitrilkautschuke XNBR** erhalten werden. Derartige hydrierte carboxylierte Nitrilkautschuke sind beispielsweise in WO-A-01/77185 beschrieben.

Unter "Hydrierung" oder "hydriert" wird im Rahmen dieser Anmeldung eine Umsetzung der im carboxylierten Nitrilkautschuk ursprünglich vorhandenen Doppelbindungen zu mindestens 50 %, bevorzugt 75 %, besonders bevorzugt 85 % verstanden.

Es handelt sich somit bei den **hydrierten carboxylierten Nitrilkautschuken HXNBR** um einen carboxylierten Nitrilkautschuk XNBR auf der Basis mindestens eines ungesättigten Nitrils, mindestens eines konjugierten Diens und mindestens eines Carboxyl- und/oder Carboxylat-Gruppen enthaltenden weiteren Termonomeren, wobei mindestens 50 % der ursprünglich im XNBR vorhandenen Doppelbindungen gesättigt sind.

Als **HXNBR** geeignet sind beispielsweise hydrierte carboxylierte Nitrilkautschuke auf der Basis eines XNBR aus Butadien und Acrylnitril und Acrylsäure und/oder Methacrylsäure und/oder Fumarsäure und/oder Maleinsäure und/oder den Methyl-, Ethyl-, Propyl-, Isopropyl-, n-Butyl, iso-Butyl-, n-Hexyl- und/oder 2-Ethylhexyl-Halbestern von Fumarsäure und/oder Maleinsäure und/oder den Methyl-, Ethyl-, Propyl-, Isopropyl-,n-Butyl-, iso-Butyl-, n-Hexyl- und/oder 2-Ethylhexyl-Estern von Acrylsäure und/oder Methacrylsäure.

Als **HXNBR** geeignet sind ferner beispielsweise hydrierte carboxylierte Nitrilkautschuke auf der Basis eines XNBR aus Butadien und Acrylnitril und einem Carboxyl-Gruppen enthaltenden Monomer, inbesondere Fumarsäure, Maleinsäure, Acrylsäure oder Methacrylsäure.

Als **HXNBR** geeignet sind ferner beispielsweise hydrierte carboxylierte Nitrilkautschuke auf der Basis eines XNBR aus Butadien und Acrylnitril und einem Carboxyl-Gruppen enthaltenden Monomer, inbesondere Fumarsäure, Maleinsäure, Acrylsäure oder Methacrylsäure, und einem Carboxylat-Gruppen enthaltenden Monomer, inbesondere dem Methyl-, Ethyl-, Propyl-, Isopropyl-, n-Butyl, iso-Butyl-, n-Hexyl- oder 2-Ethylhexyl-Halbester von Fumarsäure oder Maleinsäure oder dem Methyl-, Ethyl-, Propyl-, Isopropyl-, n-Butyl-, iso-Butyl-, n-Hexyl- oder 2-Ethylhexyl-Ester von Acrylsäure oder Methacrylsäure.

Es ist prinzipiell möglich, die Hydrierung von XNBR unter Einsatz homogener oder heterogener Hydrierkatalysatoren durchzuführen.

Wie in WO-A-01/77185 beschrieben ist es beispielsweise möglich, die Umsetzung mit Wasserstoff unter Einsatz homogener Katalysatoren, wie z.B. dem als "Wilkinson"-Katalysator ((PPh₃)₃RhCl) bekannten oder anderen durchzuführen. Verfahren zur Hydrierung von Nitrilkautschuk sind bekannt. Rhodium oder Titan werden üblicherweise als Katalysatoren verwendet, wobei aber auch Platin, Iridium, Palladium, Rhenium, Ruthenium, Osmium, Kobalt oder Kupfer entweder als Metall, oder aber bevorzugt in Form von Metallverbindungen eingesetzt werden können (siehe z.B.US-A-3,700,637, DE-PS-2 539 132, EP-A- 134 023, DE-OS- 35 41 689, DE-OS- 35 40 918, EP-A-298 386, DE-OS- 35 29 252, DE-OS- 34 33 392, US-A-4,464,515 und US-A-4,503,196).

Geeignete Katalysatoren und Lösungsmittel für eine Hydrierung in homogener Phase werden im folgenden beschrieben und sind auch aus DE-A-25 39 132 und der EP-A-0 471 250 bekannt.

Die selektive Hydrierung kann beispielsweise in Gegenwart eines Rhodium-haltigen Katalysators erreicht werden. Einsetzbar ist beispielsweise ein Katalysator der allgemeinen Formel

(R¹ₘB)ₗ RhXₙ

worin R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers ist geeignet.

Üblicherweise ist es sinnvoll, den Katalysator zusammen mit einem Co-Katalysator zu verwenden, der ein Ligand der Formel R¹ₘB ist, wobei R¹, m und B die zuvor genannten Bedeutungen besitzen. Bevorzugt ist m gleich 3, B gleich Phosphor und die Reste R' können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkylmonoaryl, Dialkyl-monocycloalkyl oder Dicycloalkyl-monoaryl-Resten.

Beispiele für Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, besonders bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalysators, bevorzugt 0,5 bis 20 und ganz besonders bevorzugt 1 bis 5 Gewichtsteile, insbesondere mehr als 2 aber weniger als 5 Gewichtsteile Co-Katalysators bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei 100 - 150 °C und einem Druck von 50 - 150 bar für 2 - 10 h mit Wasserstoff beaufschlagt.

Bei Einsatz heterogener Katalysatoren zur Herstellung hydrierter carboxylierter Nitrilkautschuke durch Hydrierung der entsprechenden carboxylierten Nitrilkautschuke handelt es sich üblicherweise um geträgterte Katalysatoren auf der Basis von Palladium.

Neben ein oder mehreren Elastomeren (1), die Carboxyl- und/oder Carboxylat-Gruppen aufweisen, können daneben auch weitere Elastomere (1) enthalten sein, die keine Carboxyl- oder Carboxylat-Gruppen aufweisen, sofern die Mischung aller Elastomeren (1) in der erfindungsgemäßen Zusammensetzung das wichtige Merkmal der Mooney-Viskosität (ML 1+4 bei 100°C) im Bereich von 1-35 erfüllt.

Als Elastomeren (1), die keine Carboxyl- oder Carboxylat-Gruppen aufweisen, sind beispielsweise NBR und HNBR einsetzbar.

Unter **NBR** werden Kautschuke verstanden, bei denen es sich um Copolymere aus mindestens einem a,β-ungesättigten Nitril und mindestens einem konjugierten Dien handelt.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Das **konjugierte Dien** kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Die hydrierten Nitrilkautschuke, HNBR, können aus den NBR-Typen in analoger Weise erhalten werden, wie zuvor für die Herstellung von HXNBR aus XNBR beschrieben wurde.

### Komponente (2)

Bei Komponente (2) handelt es sich um ein oder mehrere Salze der allgemeinen Formel (I)

(R^{y-} )_{x/y} M ^{x+} (I)

worin
- R^{y-}: ein α,β-ungesättigtes C₃-C₁₄-Carboxylat darstellt, welches y Carboxylatgruppen enthält,
- y: die Werte 1, 2, 3, oder 4 darstellen kann,
- x: 2, 3 oder 4 ist und
- M: ein zwei-, drei- oder vierwertiges Metall ist.

Bevorzugt steht M in der allgemeinen Formel (I) für Mg, Ca, Zn, Fe, Al, Ti, Pb, B, Sc, Yt, Sn oder Hf, besonders bevorzugt für Mg, Ca, Zn, Fe, Al, Ti oder Pb.

Bei dem Rest R^{y-} in der allgemeinen Formel (I) handelt es sich bevorzugt um ein α,β-ungesättigtes C₃-C₈-Carboxylat, welches y Carboxylatgruppen enthält, wobei y den Wert 1, 2, 3 oder 4 annehmen kann. Besonders bevorzugt steht R^{y-} für Acrylat, Methacrylat, Crotonat, Isocrotonat, Sorbinat, Fumarat oder Maleinat oder Mischungen daraus.

### Komponente (3)

Als Komponente (3) werden als Vernetzer ein oder mehrere Radikalspender eingesetzt. Als Radikalspender können Peroxidverbindungen, Azide, Photoinitiatoren, Redoxinitiatoren oder Kombinationen der vorgenannten eingesetzt werden.

Als Radikalspender (3) sind beispielsweise die folgenden Peroxidverbindungen geeignet:
Bis-(2,4-dichlorbenzoyl)-peroxid, Dibenzoylperoxid, Bis-(4-chlorbenzoyl)peroxid, 1,1-Bis-(t-butylperoxy)-3,3,5-trimethylcyclohexan, tert-Butylperbenzoat, 2,2-Bis-(t-butylperoxy)-buten, 4,4-Di-tert.butylperoxynonylvalerat, Dicumylperoxid, 2,5-Dimethyl-2,5-di-(t-butylperoxy)-hexan, tert-Butylcumylperoxid, 1,3-Bis-(t-butylperoxyisopropyl)-benzol, Di-t-butylperoxid, 2,5-Dimethyl-2,5-di(t-butylperoxy)-hexin, t-Butylhydroperoxid, Wasserstoffperoxid, Methylethylketonperoxid, Lauroylperoxid, Decanoylperoxid, 3,5,5-Trimethyl-hexanoylperoxid, Di-(2-ethylhexyl)-peroxydicarbonat, Poly(tert-butyl peroxycarbonat), Ethyl-3,3-di (tert-butylperoxy)-butyrat, Ethyl-3,3-di-(tert-amylperoxy)-butyrat, n-Butyl-4,4-di-(tert-butylperoxy)-valerat, 2,2-Di-(tert-butylperoxy)-butan, 1,1-Di-(tert-butylperoxy)-cyclohexan, 3,3,5-Tri-methylcyclohexan, 1,1-Di-(tert-amylperoxy)cyclohexan, tert-Butyl-peroxybenzoat, tert.-Butyl-peroxyacetat, tert.-Butyl-peroxy-3,5,5-trimethylhexanoat, tert.-Butyl peroxyisobutyrat, tert,-Butyl-peroxy-2-ethylhexanoat, tert.-Butyl-peroxypivalat, tert.-Amyl peroxypivalat, tert.-Butyl-peroxyneodecanoat, Cumyl-peroxyneodecanoat, 3-Hydroxy-1,1-di-methylbutyl-peroxyneodecanoat, tert-Butyl-peroxybenzoat, tert.-Butyl-peroxyacetat, tert.-Amyl-peroxy-3,5,5-trimethylhexanoat, tert.-Butyl-peroxyisobutyrat, tert.-Butyl-peroxy-2-ethylhexanoat, Cumyl-peroxyneodecanoat, 3-Hydroxy-1,1-di-methylbutyl-peroxyneodecanoat, 2,5-Dimethyl-2,5-di-(tert.-butyl-peroxy)-hexyn-(3-di-tert.-amyl)-peroxid, 2,5-Dimethyl-2,5-di-(tert.-butylperoxy)-hexan, tert.-Amyl-hydroperoxid, Cumolhydroperoxid, 2,5-Dimethyl-2,5-di-(hydroperoxy)-hexan, Düsopropylbenzol-monohydroperoxid sowie Kaliumperoxodisulfat.

Als Radikalspender (3) ist beispielsweise 2,2-Azobismethylethylacetonitril als **Azid** geeignet:
Weitere geeignete Azide sind beispielsweise weitere kommerziell verfügbare Azoinitiatoren und Radikalinitiatoren, die man unter den Stichworten "Vazo® free radical initiators" der FirmaDuPont und als "Free radical Azo initiators" der Firma Wako Specialty Chemicals erwerben kann.

Als geeignete Radikalspender (3) seien außerdem beispielhaft folgende **Photoinitiatoren** genannt:
Benzoin, Benzoin methyl ether, Benzoin ethyl ether, Benzoin isopropyl ether, Benzoin n-butyl ether, Benzoin isobutyl ether, Benzoylphenylcarbinol, Methylphenylglyoxylat, 4,4'-Diazidobiphenyl, 4,4'-Diazidobenzophenon, 4,4'-Diazido-biphenyloxid, 4,4'-Diazidodisulfonylbiphenyl, Azidobenzol, 4-Azidobenzoesäure, 1,2-Bis(4-azidophenyl)ethylen, 4-Aminophenyl-4'-azidophenylmethan, 2,6-Di-(4'-azidobenzal)cyclohexanon, Natrium-4,4'-diazidostilben-2,2'-disulfonat, Benzophenon, Benzophenoneoxim, Acetophenon, Bromoacetophenon, Cyclohexanon, Diphenylmonosulfid, Dibenzothiazolyldisulfid, s-Acyldithiocarbamat, m,m'-Azoxystyrol, Benzildimethylketal, 4-Methylbenzophenon, 4-Phenylbenzophenon, Ethyl-4-dimethylaminobenzoat (EPD), 2-Hydroxy-2-methyl-phenylpropan-1-on, Isopropylthioxanthon (ITX) sowie 2-Methyl-1-(4-methylthiophenyl)-2-morpholinopropan-1-on.

Als geeignete Radikalspender (3) seien außerdem beispielhaft folgende **Redoxinitiatoren** genannt:
Fe (II)/Hydroperoxid, Peroxid/tert. Amin, Peroxodisulfat/Thiosulfat,Hydroperoxid/Thiosulfat.

### Komponente (4)

Die erfindungsgemäße vernetzbare Zusammensetzung kann ferner weitere Bestandteile als Komponente (4) enthalten:
- in der Kautschukindustrie gängige **Füllstoffe** wie Ruße, Kieselsäure, Talkum, Kreide oder Titandioxid, Kaoline, Bentonite, Kohlenstoff Nanotubes, Aluminiumhydroxyd, Magnesiumhydroxyd oder Teflon (letzteres bevorzugt in Pulverform),
- Polymere, die nicht unter die erfindungsgemäße Elastomer(1)-Definition fallen,
- Öle,
- Weichmacher,
- Verarbeitungshilfsmittel,
- Stabilisatoren und Antioxidantien,
- Farbstoffe,
- Fasern umfassend organische und anorganische Fasern sowie Faserpulpe,
- Vulkanisationsaktivatoren,
- zusätzliche polymerisierbare Monomere, Dimere, Trimere oder Oligomere

Die Verwendung eines Antioxidans in den erfindungsgemäßen Zusammensetzungen kann gewünscht sein. Beispiele üblicher Antioxidantien schließen p-Dicumyldiphenylamin (Naugard^{®} 445), Vulkanox^{®} DDA (styrolisiertes Diphenylamin), Vulkanox^{®}ZMB2 (Zink-Salz von Methylmercapto-benzimidazol), Vulkanox^{®}HS (polymerisiertes 1,2-dihydro-2,2,4-trimethylchinolin) und Irganox^{®} 1035 (Thiodiethylen-bis(3,5-di-tert.-butyl-4-hydroxy)hydrocinnamat oder Thiodiethylen-bis(3-(3,5-di-tert.-butyl-4-hydroxyphenyl) propionat).

**Gegenstand der Erfindung** ist ferner ein Verfahren zur Herstellung der erfindungsgemäßen vernetzbaren Zusammensetzungen, indem man alle Komponenten (1)-(3) und optional Komponente(n) (4) mischt.

Die Reihenfolge, in der die Komponenten miteinander gemischt werden, ist nicht von grundlegender Bedeutung, sondern wird jeweils abgestimmt auf die zur Verfügung stehenden Mischaggregate.

Die Mischung der Komponenten (1), (2), (3) und gegebenenfalls (4) kann dabei, je nach Temperatur, unter Verwendung der typischen, in der Kautschukindustrie gängigen Mischsystemen erfolgen. Einsatzbar sind a) diskontinuierlich mischende Aggregate in Form von Mischwalzen oder Innenmischern sowie b) kontinuierlich mischende Aggregate wie Mischextruder.

Dies bietet sich im Temperaturbereich nicht-Newtonschen Verhaltens der erfindungsgemäßen vernetzbaren Mischungen an, kann aber auch bei höheren Temperaturen im Bereich des Newtonschen-Verhaltens der Mischungen so erfolgen. Möglich ist dabei aber auch der Einsatz von in der Klebstoffindustrie gebräuchlichen Aggregaten.

Besonders bewährt hat es sich, die Mischung der Komponenten (1), (2) und (3) sowie gegebenenfalls (4) bei einer vorgegebenen Mischertemperatur im Bereich von ca. 30-40°C durchzuführen, da hier mit den oben genannten, in der kautschukverarbeitenden Industrie gängigen Mischaggregaten genügend hohe Scherkräfte appliziert können, um eine gute Durchmischung zu erreichen.

Alternativ kann auch in geeigneten Aggregaten bei höheren Temperaturen gemischt werden. Im Einzelfall kann es notwendig sein, zunächst die Komponenten (1) und (2) sowie gegegebenenfalls (4) zu mischen und den Radikalspender (3) erst ganz zum Schluß zuzumischen. Dies kann zum Beispiel im Mischaggregat im Endstück einer Düse unmittelbar vor dem Austreten der Mischung auf das Substrat / in die Form geschehen. Ein derartiges reaktives Mischen analog gängigen Zweikomponenten Systemen auf Basis von PU- oder Silikon-Kautschuken ist bislang nicht für herkömmliche Hochleistungskautschuke beschrieben, da diese nicht in der dazu notwendigen niedrigviskosen Form vorlagen. Ein besonderer Vorteil der erfindungsgemäßen Zusammensetzungen gegenüber PU- und Silikon-Kautschuken ist hier somit zusätzlich gegeben, da die austretenden Formmassen bei Kühlung schnell eine hohe Standfestigkeit erlangen und somit auch nicht unmittelbar anschließende Verarbeitungsprozesse behindern wie z.B. durch nachträgliche Verklebung.

In der Praxis erhält man nach dem Mischen der erfindungsgemäßen Komponenten die vernetzbaren Zusammensetzungen z.B. in Form sogenannter "Felle", Fütterstreifen oder Fütterkörper, oder auch als Pellets oder Granulate. Dies können anschließend in Formen gepresst oder spritzgegossen werden und werden entsprechend den eingesetzten Radikalspendern bei geeigneten Bedingungen vernetzt.

**Gegenstand der Erfindung** ist ferner die **Herstellung von vernetzten Elastomeren,** von denen mindestens eines Carboxyl- und/oder Carboxylat-Gruppen aufweist, indem man die erfindungsgemäße vernetzbare Zusammensetzung der zuvor genannten Art einem Energieeintrag unterwirft.

Der Energieeintrag kann in Form von thermischer Energie oder Strahlungsenergie erfolgen, je nachdem welcher Typ des Vernetzers (3) in der vernetzbaren Zusammensetzung gewählt wird.

Im Rahmen der Vernetzung der erfindungsgemäßen vernetzbaren Zusammensetzung führen die Vernetzer (3) einerseits zu einer Polymerisation der ungesättigten Säure in Komponente (2) und bewirken ferner eine radikalische Vernetzung zwischen und mit den eingesetzten Elastomeren (1).

**Gegenstand der Erfindung** sind ferner die vernetzten Elastomere, von denen mindestens eines Carboxyl- und/oder Carboxylat-Gruppen aufweist, die durch Vernetzung der erfindungsgemäßen Mischungen erhältlich sind.

Die vernetzten Elastomere weisen eine Festigkeit, gemessen im Zugversuch nach DIN 53504, von größer 10 MPa auf und besitzen ferner eine Härte, gemessen nach DIN 53505, von größer 60 Shore A.

Diese durch die radikalspendenden Vernetzer irreversibel vernetzten Elastomere zeichnen sich dadurch aus, dass sie trotz niedriger Viskosität überraschenderweise hervorragende dynamisch mechanische Eigenschaften und Festigkeiten besitzen, wie sie bisher nur ausgehend von hochviskosen Mischungen auf Basis von Hochleistungskautschuken wie HNBR, EVM, ACM, AEM nach der Vulkanisation erhalten werden konnten. Durch diese Kombination von Eigenschaften sind völlig neue Bauteilgruppen und Applikationsformen und Anwendungen denkbar. Es handelt sich um Hochmodulvulkanisate auf Basis niedrigviskoser erfindungsgemäßer Mischungen. Produkte mit diesem Eigenschaftsprofil in Verarbeitung und Vulkanisateigenschaften sind auf dem Markt nicht bekannt und technisch nicht beschrieben.

Die erfindungsgemäßen vernetzbaren Zusammensetzungen können zur Herstellung einer Vielzahl unterschiedlicher Produkte eingesetzt werden, von denen einige nachfolgend aufgezählt werden:

### 1. Elastische Klebmassen

**Gegenstand der Erfindung** ist die Verwendung der vernetzbaren Zusammensetzungen als elastische Klebmassen.

Elastische Klebmassen basieren normalerweise auf Verbundsystemen aus Epoxiden, Diolen, Isocyanaten, Carbonsäuren. Eine Elastifizierung findet typischerweise durch niedermolekulare amorphe Diole oder durch Verwendung niedermolekolarer elastomerer Zusätze statt. Die gängigen Systeme weisen hohe Festigkeiten bis zu ca 100°C auf. Je nach Schmelzpunkt der Bestandteile sinken die Festigkeiten bei höheren Temperaturen deutlich ab. Alle diese Klebstoffe sind hydrolyseempfindlich und nur mäßig ölbeständig und damit im Einsatzfeld beschränkt.

Die erfindungsgemäßen vernetzbaren Zusammensetzungen eignen sich besonders zur Herstellung hochfester Klebmassen mit hervorragenden elastischen Eigenschaften, welche flüssig appliziert werden, auf dem kalten Bauteil dann aber formstabil vorliegen. Nach Pressung und Vernetzung unter Energieeintrag wird ausgehend von diesen elastischen Klebmassen eine hervorragende Haftungsschicht zwischen Metallen und Metall, zwischen Metall und polaren Hochtemperatur-Thermoplasten, zwischen Metall und Geweben/Cord, zwischen Gewebe/Cord und Thermoplasten, zwischen Gewebe/Cord und Gummi, zwischen Gewebe/Cord undGewebe/Cord ermöglicht. Klebmassen auf Basis der erfindungsgemäßen vernetzbaren Zusammensetzungen zeichnen sich darüber hinaus durch exzellente Öl- und Temperaturbeständigkeiten aus.

### 2. Imprägniermassen

**Gegenstand der Erfindung** ist ferner die Verwendung der erfindungsgemäßen vernetzbaren Zusammensetzungen als Imprägniermassen.

Hierfür wird die erfindungsgemäße vernetzbare Zusammensetzung auf das zu imprägnierende Substrat aufgebracht und anschließend durch Energieeintrag vemetzt.

Das Aufbringen der erfindungsgemäßen vernetzbaren Zusammensetzung auf das Substrat kann z.B. bei einer Gewebeimprägnierung a) durch Direktapplikation (Tränkung) mit der erfindungsgemäßen vernetzbaren Zusammensetzung oder b) Belegung durch Friktionierung von Gewebe in der erfindungsgemäßen vernetzbaren Zusammensetzung erfolgen.

Durch Ausübung dieses Verfahrens können teure und in der Qualität schwierige Latexbeschichtungssysteme sowie aufwendige und umweltproblematische Lösungsverfahren abgelöst bzw. Lösungen von sehr hoher Konzentration gefertigt werden, womit wiederum Lösungsmittelmengen eingespart und Produktionskapazitäten, welche häufig durch die Kapazität zur Lösungsmittelrückführung beschränkt sind, erweitert werden. Gegenüber der Latexapplikation besteht der wesentliche Vorteil der erfindungsgemäßen vernetzbaren Zusammensetzung darin, dass eine Vortemperung der Materialien, wie sie zur Aktivierung des Latex notwendig ist, entfällt. Einsatzfelder für solche imprägnierten Gewebe sind zum Beispiel Riemen aller Art, Membranen, Bälge, Luftfedern, Gummimuskeln und auch Schläuche.

### 3. Riemen beispielsweise in Form von Zahnriemen oder Antriebsriemen

**Gegenstand der Erfindung** ist die Verwendung der erfindungsgemäßen vernetzbaren Zusammensetzungen zur Herstellung von Riemen, bevorzugt Zahnriemen oder Antriebsriemen.

Die typische und dem Fachmann bekannte Herstellung von Riemen, z.B. in Form von Zahnriemen, läuft nach folgendem Verfahren: Eine Trommel mit negativen Zahnausprägungen wird mit einem noch flexiblen Gewebe (typischerweise auf Basis von Polyamidgarnen) bespannt. Auf diese Trommel wird ein Kord (typischerweise auf Basis von Stahl-, Messing-, Polyaramid-, Glas- oder Carbonfasern) dicht (Kordfädenabstände ca. 0,05 bis 1 mm) gewickelt. Auf diesen gewickelten Kord werden Lagen/Felle von Gummimischungen aufgelegt. Auf die Gummimischungen kann je nach Bedarf noch ein weiteres Gewebe gespannt werden. Die fertig belegte Trommel wird in einen Vulkanisationsautoklaven mit semielastischen Membranen überführt. Die Gummilagen werden durch die Cordlage hindurch in die Zahnkavitäten gepresst, wobei das Gewebe die äußere Umrandung der Zähne bildet. Die Dicke der Gummilagen ist so bemessen, dass sowohl die Zahnkavitäten ausgefüllt als auch eine gewünschte Schichtdicke oberhalb der Kordlage erhalten wird. Nach der Pressung beginnt der Vulkanisations/Vernetzungsvorgang. Nach der Vernetzung ist der Riemen fertig und kann in der gewünschte Breite geschnitten werden, da die Trommel zur Riemenfertigung typischerweise 0,5-2,5 m breit ist, während ein Riemen typischerweise eine Breite von 1-30 cm aufweist. Der Riemenrücken (der Teil vom Riemen der oberhalb der Kordlage liegt) kann im Anschluß noch geschliffen oder weiter behandelt werden. Die handelsüblichen Riemen nach dem beschriebenen Verfahren werden typischerweise auf Basis einer einzigen Mischung gefertigt. Nachteilig daran ist, dass Zahn und Rücken unterschiedlichen Anforderungen genügen müssen. So muss der Zahn häufig einen sehr hohen Modulus und hohe Festigkeiten aufweisen (dies gilt z.B. für Zahnriemen, die als Antriebsriemen für die Motorsteuerung in gängigen Automobilmodellen Anwendung finden), während der Rücken eher flexibel sein muss, um z.B. beim Umlauf um kleine Umlenkrollen nicht zu brechen. Diese zum Teil gegenläufigen Forderungen schränken die Auswahl an geeigneten Mischungen ein. Prinzipiell ist es möglich, die Mischungszusammensetzung der Felllagen vor der Vulkanisation so zu wählen, dass die untere Lage ein hochmoduliges Vulkanisat erzeugt und die Rückenlage ein niedrigmoduliges Vulkanisat. Die Schwierigkeit besteht darin, dass diese Lagen bei der Verpressung nicht vermischt werden dürfen. Tatsächlich ist es so, dass hochmodulige Vulkanisate typischerweise auf relativ hochviskosen Mischungen beruhen (z.B. die hochgefüllt sind mit verstärkenden Füllstoffen, da sonst die erforderlichen dynamischen Eingenschaften und der Modulus des Produktes nicht errreicht werden), während niedrigmodulige Vulkanisate auf vergleichsweise niedrigviskosen Mischungen beruhen (niedrig gefüllt sind mit verstärkenden Füllstoffen). Während der Pressung solcher übereinander geschichteten Felle durch die Kordlage hindurch in die Zähne kommt es unweigerlich zu einer Vermischung, welche für die Funktion des so erhaltenen Riemens kritisch ist. Aus diesem Grunde sind solche Riemen aus mindestens zwei Mischungen stark unterschiedlicher Viskosität nach einem **einstufigen Aufbauprozess** nicht auf dem Markt.

Dem Fachmann bekannt ist ferner ein **zweistufiges Verfahren,** das es erlaubt, die oben beschriebenen Produktvorteile eines Zahnriemens, der in den Eigenschaften unterschiedliche Mischungen für den Zahn wie den Rücken erlaubt, indem die Zahngründe teils händisch mit Mischungsstreifen/strängen ausgelegt werden und erst dann in einem separaten zweiten Schritt das Fell für den Rücken appliziert wird und dann wie oben beschrieben weiterverfahren wird. Dieses Verfahren hat den großen Nachteil, dass ein zweistufiger Prozess notwendig ist und für dieses Verfahren spezielle Bauteile benötigt werden. Insgesamt ist dieses Verfahren deutlich unwirtschaftlicher als das erste beschriebene Verfahren.

Die erfindungsgemäße Verwendung der speziellen vernetzbaren Zusammensetzungen erlaubt es nun, den beschriebenen wirtschaftlicheren einstufigen Prozess mit den Vorteilen des aufwendigeren zweistufigen Verfahrens zu vereinigen. Dies wird erreicht durch die Möglichkeit, erfindungsgemäße extrem niedrigviskose Mischungen bereitzustellen, die nach der Vernetzung dynamisch beständige, hochmodulige Vulkanisate ergeben. Die Rückenmischung kann auf einer klassischen Mischungszusammensetzung beruhen, wobei die Viskosität deutlich oberhalb der erfindungsgemäßen vernetzbaren Zusammensetzung für die Zähne liegt. Die großen Unterschiede in der Mischungsviskosität der beiden Schichten (bei hohen Temperaturen / hohen Scherungen) erlaubt es nun, der höherviskosen für den Rücken vorgesehenen Schicht die für die Zahnfüllung vorgesehene Schicht vor sich her ohne größere Rückvermischung in die Zahn-Kavitäten zu schieben.

Besonders vorteilhaft bei dieser Anwendung der erfindungsgemäßen vernetzbaren Zusammensetzung ist es, dass die niedrigviskose erfindungsgemäße Zusammensetzung bei Raumtemperatur noch eine ausreichende Festigkeit (Greenstrength) aufweist, dass der Zahnriemen nach einem üblichen Verfahren mit den üblichen Geräten aufgebaut werden kann, weil aus der erfindungsgemäßen Zusammensetzung bei Raumtemperatur noch stabile Felle hergestellt werden können, die für die Konfektionierung des Riemens notwendig sind.

### 4. Walzendecken

**Gegenstand der Erfindung** ist ferner die Verwendung der erfindungsgemäßen Zusammensetzungen zur Herstellung von Walzendecken.

Hochmodulige Walzendecken, wie sie z.B. in der Transport-, Papier- oder Stahlindustrie eingesetzt werden, stellt man, wie dem Fachmann bekannt, normalerweise auf Basis von Gummivulkanisaten her. Um die geforderten Eigenschaften extremer Härten und Moduli zu erreichen, werden typischerweise sehr hochviskose Mischungen benötigt. Diese Mischungen werden in Schichten auf den Walzenkörper gelegt als Felle oder direkt extrudiert. Dabei sind der Viskosität und damit dem Füllgrad, der die hohen Moduli und Härten erzeugen soll, Grenzen gesetzt. Sehr hochviskose Mischungsfelle können während der Vulkanisation häufig nicht mehr zusammenlaufen, und so entstehen vorgeformte Risse und Spannungen in den Produkten, die zu einem frühzeitigen Ausfall führen. Ein anderes, dem Fachmann bekanntes Verfahren, um hochmodulige Walzendecken zu erzeugen, geht von Polyurethanmischungen aus, welche flüssig appliziert werden, nach einer in situ-Aushärtung (durch reaktive Vernetzung, Kristallisation, Überführung in ein thermoplastisches Polyurethan (TPU)) extreme Härten und sehr gute dynamische Beständigkeit aufweisen. Diese Produkte haben allerdings die Schwierigkeit, dass die dynamisch-mechanischen Eigenschaften bei Temperaturen > 100°C sehr stark abnehmen und ferner eine nur mangelhafte Beständigkeit, unter anderem wegen Hydrolyse gegen verschiedenste Medien, besteht. Die Ursache dafür liegt in der Thermoplastizität (TPUs gehören zu der Werkstoffklasse der TPEs. Nach Erweichen der kristallinen Anteile gehen die Eigenschaften weitgehend verloren) und chemischen Unbeständigkeit gegenüber Säuren und Basen, sowie Estern, aromatischen Ölen und Fetten.

Bei Verwendung der erfindungsgemäßen vernetzbaren Zusammensetzung zur Herstellung solcher Walzendecken wird dagegen die Applikation der erfindungsgemäßen Zusammensetzungen auf den Walzengrundkörper bei Temperaturen > 100°C und / oder bei hohen Scherungen ermöglicht. Auf die Walze aufgetragen wird der sehr niedrigviskose z.T. "flüssige" Einsatzstoff, d.h. die erfindungsgemäßen vernetzbaren Zusammensetzung, die trotzdem eine ausreichende Standfestigkeit aufweist, um vulkanisiert zu werden und nach der Vulkansiation zu Produkten mit überragenden physikalischen Eigenschaften, hohem Modulus und Festigkeit führt. In einer nicht "flüssigen", aber noch verarbeitbaren Applikationsform, können hierbei Füllgrade erreicht werden, welche deutlich höher als die herkömmlicher Systeme sind, ohne dass die Verarbeitbarkeit gefährdet wird und die erwähnten Spannungsrisse in den Walzendecken auftreten.

### 5. Thermoplastische Vulkanisate

**Gegenstand der Erfindung** ist ferner die Verwendung der vernetzbaren Zusammensetzungen zur Herstellung von thermoplastischen Vulkanisaten.

Hierbei werden neben der vernetzbaren Zusammensetzung auf Elastomerbasis ferner einer oder mehrere thermoplastische Polymere verwendet.

Bei der Herstellung von thermoplastischen Vulkanisaten mittels dynamischer Vernetzung ist der kinetische Prozess der Phasenumkehr, bei der zu Beginn Thermoplastteilchen dispergiert in der Elastomermatrix vorliegen, in eine Phasenstruktur, wo die Elastomerteilchen vulkanisiert und dispergiert in einer Thermoplastmatrix vorliegen, von entscheidender Bedeutung. Damit eine möglichst homogene Teilchenstruktur mit möglichst geringen Teilchengrößen erreicht wird (als Grundvoraussetzung für gute dynamisch mechanische Eigenschaften der Produkte) muss die Viskosität der Thermoplastschmelze und die Viskosität der Kautschukphase möglichst vergleichbarer Größenordnung sein. Sind die Viskositätsunterschiede zu groß, so werden nur Teilchengrößen der Kautschukphase > 1-50 µm erreicht, welches zu nur minderwertigen Eigenschaften des gewünschten Produktes führt. Um diese Viskositäten anzupassen, werden häufig große Mengen von Weichmachern eingesetzt, die naturgemäß zu einer Schwächung der Eigenschaften der elastomeren Phase führen. Für ölbeständige Vulkanisate ist der Einsatz von großen Mengen Weichmachern (teilkompatible Öle, die benutzt werden, um die Viskosität einer Mischung zu erniedrigen) aufgrund der häufig mangelhaften Kompatibilität von Weichmacher und Elastomer nicht erwünscht, weil bei zu hohen Dosierungen von Weichmachern diese am Bauteil ausschwitzen können, was zu einer Verminderung der optischen Qualität der Bauteile führt.

Durch Verwendung der erfindungsgemäßen vernetzbaren Zusammensetzungen ist es nun möglich, hochpolare, ölbeständige Elastomerphasen von sehr niedriger Viskosität mit trotzdem überragenden physikalischen Eigenschaften bereitzustellen, die die geschilderten Nachteile überwinden, dass heißt, es werden gleichzeitig exzellente Verarbeitungseigenschaften und Phasenverteilung bei Erhalt der optischen und mechanischen Eigenschaften erreicht.

Als **Polyamide** können in der erfindungsgemäßen Zusammensetzung Homo- oder Copolymere eingesetzt werden, die Monomerbausteine in der Polymerhauptkette enthalten, die über Amidbindungen (-C(=O)-NH-) verknüpft sind. Beispiele für einsetzbare Polyamide sind Polycaprolactam (Nylon 6), Polylaurolactam (Nylon 12), Polyhexamethylenadipat (Nylon 6,6), Polyhexamethylenazelaamid (Nylon 6,9), Polyhexamethylensebacamid (Nylon 6,10), Polyhexamethylenisophthalamid (Nylon 6, IP), Polyaminoundecansäure (Nylon 11), Polytetramethylenadipamid (Nylon 4,6) sowie Copolymere von Caprolactam, Hexamethylendiamin und Adipinsäure (Nylon 6,66) and Aramide wie Polyparaphenylenterephthalamid. Die Mehrzahl der Polyamide hat Erweichungspunkte und Schmelzpunkte im Bereich von 120 bis 260°C. Die Polyamide haben bevorzugt ein hohes Molekulargewicht und sind kristallin.

Als **Polyester** können in der erfindungsgemäßen Zusammensetzung Homo- oder Copolymere eingesetzt werden, die Monomerbausteine in der Polymerhauptkette aufweisen, die über Ester-Gruppen (-C(=O)-O-) verbunden sind. Eingesetzt werden können als Homopolyester beispielsweise die Hydroxycarbonsäure-Typen oder Dihydroxy-Dicarbonsäure Typen. Erstere können durch Polykondensation einer ω-Hydroxycarbonsäure oder durch ringöffnende Polymerisation cyclischer Ester (Lactone) hergestellt werden, letztere durch Polykondensation zweier komplementärer Monomere, z.B. einem Diol und einer gesättigten oder ungesättigten Dicarbonsäure.

Eingesetzt werden können Poly(ethyleneterephthalat), Poly(oxy-1,2-ethandiyl-oxycarbonyl-1,4-phenylencarbonyl), Poly(1,4-dimethylencyclohexaneterephthalat), Poly(butylenterephthalat), Poly(tetramethyleneterephthalat), Poly(oxy-1,4-butandiyl-oxycarbonyl-1,4-phenylencarbonyl), (siehe auch Ullmann's Encyclopedia of Industrial Chemistry Copyright © 2002 DOI: 10.1002/14356007.a21_227 Article Online Posting Date: June 15, 2000).

Als **Polyimide** können in der erfindungsgemäßen Zusammensetzung Homo- oder Copolymere eingesetzt werden, die Monomerbausteine in der Polymerhauptkette enthalten, die über Imid-Gruppen verbunden sind. Die Imid-Gruppen können dabei als lineare oder cyclische Einheiten vorliegen. Die Schmelzpunkte der geeigneten Polyimide liegen im Bereich 150-260°C. (siehe auch Ullmann's Encyclopedia of Industrial Chemistry Copyright © 2002 by Wiley-VCH Verlag GmbH & Co. KGaA.DOI: 10.1002/14356007.a21_253).

Als **Polypropylene** können in der erfindungsgemäßen Zusammensetzung alle Polypropylene mit einem Schmelzpunkt > 150°C und einem hohen Anteil an Kristallinität eingesetzt werden.

Als **Polyether** können in der erfindungsgemäßen Zusammensetzung Homo- oder Copolymere eingesetzt werden, die Monomerbausteine in der Polymerhauptkette enthalten, die über Ether Gruppen (C-O-C) verbunden sind und sich durch einen Schmelzpunkt größer als ungefähr 150°C und kleiner als ungefähr 260°C auszeichnen

### 6. Formteile

**Gegenstand der Erfindung** ist ferner die Verwendung der erfindungsgemäßen vernetzbaren Zusammensetzungen zur Herstellung von Formteilen.

Formteile werden typischerweise im Spritzguss- oder Kompressions-Verfahren hergestellt. Je feiner die gewünschten Strukturen, desto höher sind die Anforderungen an die Fließeigenschaften der benutzten Materialien. Feine Strukturen kombiniert mit hohen Festigkeiten und hohem Modulus sind hier eine dem Fachmann bekannte Herausforderung. Fließeigenschaften können häufig über Prozesshilfsmittel verbessert werden. Dabei tritt das Prozesshilfsmittel während des Verarbeitungsprozesses an die Oberflächen der Mischungen und benetzt die Kontaktflächen mit den Werkzeugen. Auf diese Weise wird die Wandhaftung vermindert und das Fließverhalten verbessert. Dieser Vorteil geht allerdings ebenso häufig mit einer erhöhten Verschmutzung der Teileoberflächen einher, weshalb diese zusätzlichen Reinigungsprozessen unterzogen werden müssen und somit die Nutz- bzw. Standzeiten des Werkzeuges fallen bzw. erhöht werden.

Eine Lösung dieses Problems bietet die erfindungsgemäße Zusammensetzung, weil hier hohe Fließfähigkeit mit exzellenten Eigenschaften nach der Vulkanisation verknüpft wird.

### Als Verfahren zur Herstellung von Formteilen seien hier beispielsweise genannt:

### A In place Gasketing

Das sogenannte "In place Gasketing" ist ein Verfahren, bei dem normalerweise sehr niedrigviskose, zum Teil flüssige, Ausgangsstoffe, zumeist auf Basis von Polyurethan- oder Silikon-kautschuken flüssig verarbeitet, in Formen gegossen werden, danach reaktiv vernetzt werden. Beide Systeme zeigen bei hohen Einsatztemperaturen von größer 100°C im Vergleich zu anderen Hochleistungselastomeren wie HNBR, EVM, AEM, ACM nur schlechte physikalische Eigenschaften und eine niedrige Quellbeständigkeit gegenüber polaren Medien, weshalb die Einsatzmöglichkeiten auf den Bereich mechanisch unbelasteter Systeme mit nur geringer Ölbeständigkeit beschränkt sind.

Mit der erfindungsgemäßen Zusammensetzung können nun mittels des In-Place Gasketing aufgrund der niedrigen Viskosität bei höherer Temperatur und/oder hoher Scherung komplexe Systeme gefüllt und bei vorhandener Kühlung der Vorlagen eine Standfestigkeit erzeugt werden, die einen nachgeschalteten Vernetzungprozess erlaubt ohne kritischen Verlust der Dimension der Dichtungsteile. Nach Vulkanisation zeigen diese Produkte hohe Temperatur- und Ölbeständigkeit sowie exzellente dynamisch mechanische Eigenschaften. Sie vereinigen somit die Vorteile von flüssigen Systemen mit denen, basierend auf der Mischung von hochviskosen Hochleistungselastomeren.

### B Kunstoff-Kautschuk Co-Spritzguss

Bei Kunstoff-Kautschuk Co-Spritzguss handelt es sich um ein Verfahren, bei dem zuerst ein Kunstoff/Thermoplastbauteil in einer Thermoplastform gespritzt wird. Dieses wird in einem Drehtellerwerkzeug innerhalb derselben Maschine zu einer Kautschukspritzeinheit transportiert, wobei dann der Kautschuk eingespritzt und auf der einen Seite mit Kontakt zur Thermoplastform sowie auf der anderen Seite mit Kontakt zur Metallform vulkanisiert. Dieses Verfahren ist vorteilhaft, weil in einem einzigen Schritt komplexe Thermoplast-Kautschuk Formteile gespritzt und verbunden werden können. Kritisch für die Herstellung von komplexen Bauteilen z.B. Thermoplastformteilen mit komplizierten Kautschukvulkanisat-Dichtelementen ist die Fließfähigkeit der Kautschukmischung sowie das Eigenschaftsprofil des vulkanisierten Kautschuks sowie die Haftung zwischen beiden Komponenten. Extrem fließfähige Kautschukmischungen auf Basis von z.B. Silikonkautschuk zeigen zwar gute Formfüllung, doch noch sehr beschränkte Haftung und Vulkanisateigenschaften. Herkömmliche Kautschukmischungen können häufig aufgrund ihrer hohen Viskosität nur schwerlich komplexe Kavitäten füllen. Eine weitere Schwierigkeit herkömmlicher Systeme ist es, Zykluszeiten, wie bei reaktiv-Vernetzungssystemen von z.B. Silikon oder Polyurethan-Kautschuk möglich, zu erreichen, da die Vernetzungszeiten beim Einsatz von geeigneten Peroxiden oder auch bei Anwendung von Aminvernetzungssystemen wie z.B. beim AEM-Kautschuk, welche für Hochtemperaturanwendungen notwendig sind, relativ lang sind. Schwierig ist hier immer der Abgleich von Anvernetzung und Ausvernetzung. Eine möglichst lange Anvernetzungszeit ist notwendig, um eine Formfüllung besonders bei hochviskosen Materialien zu ermöglichen, eine kurze Ausvernetzungszeit ist nötig, um die Zykluszeiten im Kautschuk-Kunstoff-Co-Spritzgussverfahren klein zu halten, da der Vulkanisationsprozess des Kautschuks der zeitbestimmende Faktor in diesem Verfahren ist.

Der Einsatz der erfindungsgemäßen Zusammensetzungen ermöglicht in diesem erfindungsgemäßen Verfahren sowohl exzellente Formfüllung wie auch exzellente Vulkanisateigenschaften, hohe Haftung und vergleichsweise kurze Zykluszeiten.

Zusätzlich zu den vorgenannten breiteren Verwendungsmöglichkeiten können die erfindungsgemäßen vernetzbaren Zusammensetzungen auch für die nachfolgenden Spezialanwendungen eingesetzt werden, so z.B. zur Herstellung von geschäumten Formteilen, Formteilen für dichtenden Klebemassen, Flachdichtungen (auch Weichstoffdichtungen genannt), Fugendichtungen (massiv oder geschäumt), Reib- und Bremsbelägen, Kupplungsbelägen, als Zusatz zur Elastifizierung von Phenolformaldehydharzmassen und Epoxidharzmassen, zur Schlagzähmodifizierung von Thermoplasten und Duroplasten, zur Herstellung von Zylinderkopfdichtungen, Zylinkerkopfdeckeldichtungen, Schläuchen, Membranen, Dichtungen, Bälgen, Gummimuskeln, Blechbeschichtungen, lösungsmittelfreien bzw. lösungsmittelarmen Haftsystemen, als Gewebeverklebung ohne separate Haftschicht, Gewebedeckschichten, Gummi-Metallhaftsystemen mit hohem Modul, Flächenverklebungen, zur lösungsmittelfreien Flexibilisierung von Platinen anstelle von gemahlenem Kautschuk, als beschichtete Metalldichtungen, Reparaturmischungen für Transportbänder oder Riemen, als Haftmischungen für die Verbindung von Endlosbändern und Riemen und für Produkte hergestellt nach dem Siebdruckverfahren.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

### Beispiele:

Als primäres Mischaggregat wurde eine Mischwalze mit auf 30°C gekühlten Walzwerk der Firma Troester vom Typ WNU3 mit Walzen eingesetzt, die einen Durchmesser von 200mm besassen. Hierbei wurde das Elastomer vorgelegt und alle weiteren Komponenten in der Reihenfolge (2), dann (4), dann (3) (siehe unten aufgeführte Liste der Komponenten) hinzugefügt. Die Drehzahl und Friktion der Walze wurde dabei so gesteuert, dass stabile Felle erhalten werden. Nach ca. 5 min Mischzeit war die Mischung beendet und das Produkt wurde als Fell von der Walze abgezogen. Nachfolgend wurde in Plattenpressen eine Vulkanisation dieser Felle bei 180°C für 15 min vorgenommen.

### Eingesetzte Komponenten:

- 1.: **Therban^{®} AT-XT VP KA 8889**
carboxylierter hydrierter Nitrilkautschuk, ACN-Gehalt: 33 Gew.-%, Mooney Viskosität ML 1+4 @100°C: Typ a) 10 ME bzw. Typ b) 25 ME, Restdoppelbindungsgehalt: 3,5% .
Das hier verwendete Elastomer wurde durch Metathese von Therban^{®} XT VP KA 8889 (XNBR) der Lanxess Deutschland GmbH und anschließende Hydrierung hergestellt.
- 2.: **Therban® XT VP KA 8889**
carboxylierter hydrierter Nitrilkautschuk der Fa. Lanxess Deutschland GmbH ACN-Gehalt: 33%, Mooney Viskosität ML 1+4 @ 100°C: 78 ME, Restdoppelbindungsgehalt: 3,5% .
Dieses Elastomer ist kommerziell erhältlich von der Lanxess Deutschland GmbH.
- 3.: **Sartomer^{®} SR 633**
Zinkdiacrylat der Firma Sartomer
- 4.: **Statex N330**
Ruß der Firma Columbian Chemical Company
- 5.: **Ruß IRB 7**
Industrie Reference Carbon black 7
- 6.: **Zinkoxid IRM 91**
Industrie Reference ZnO
- 7.: **Rhenofit^{®} OCD**
Oktyliertes Diphenylamin (Alterungsschutzmittel) der Firma Rheinchemie
- 8.: **Rhenofit^{®} TAC/S**
Triallylcyanurat (Vulkanisationsaktivator) der Firma Rheinchemie
- 9.: **Perkadox^{®} 14-40 B-GR**
Bis-(tert butyl peroxiisopropyl)benzol der Firma Akzo Nobel Chemicals B.V.
- 10.: **Vulkanox^{®} ZMB2/C5**
Zinkmercaptobenzimidazol-Stabilisator der Firma Lanxess Deutschland GmbH

Alle Mengenangaben in den Tabellen "phr" bedeuten parts per hundred parts of rubber. Die Elastomerkomponente entspricht 100 phr.

Die Bestimmung der komplexen Viskosität η* und der Änderung der komplexen Viskosität in Abhängigkeit von der Temperatur oder Amplitude erfolgte in einem Rubber Process Analyser (RPA 2000) der Firma Alpha Technologies.

Die Vulkanisationsmessung erfolgte in einem Monsanto-Rheometer MDR 2000 bei einer Prüftemperatur von 180°C über eine Prüfzeit von 15 min.

**Beispiele 1-9:** Alle Vergleichsbeispiele sind in den folgenden Tabellen mit einem * hinter der jeweiligen Beispielsnummer gekennzeichnet.

**Tabelle 1: Vernetzbare Zusammensetzungen**

| **Beispiel** | **1*** | **2*** | **3*** | **4** | **5** | **6*** | **7*** | **8*** | **9*** |
|---|---|---|---|---|---|---|---|---|---|
| **Komponente** | **phr** | | | | | | | | |
| Therban^{®} XT-AT VPKA 8889 (10 ME) | 100 | | | 100 | | | 100 | | |
| Therban^{®} XT-AT VPKA 8889 (25ME) | | 100 | | | 100 | | | 100 | |
| Therban^{®} XT VPKA 8889 (87 ME) | | | 100 | | | 100 | | | 100 |
| Statex N 330 | | | | | | | | | |
| Sartomer^{®} SR 633 | | | | 54 | 54 | 54 | | | |
| IRB 7 | | | | | | | 40 | 40 | 40 |
| IRM 91 | | | | | | | 3 | 3 | 3 |
| Rhenofit^{®} OCD | | | | | | | 2 | 2 | 2 |
| Vulkanox^{®} ZMB2/C5 | | | | | | | 0 | 0 | 0 |
| Rhenofit^{®} TAC/S | | | | | | | 2 | 2 | 2 |
| Perkadox^{®} 14-40 B-GR | 4 | 4 | 4 | 4 | 4 | 4 | 10 | 10 | 10 |

**Tabelle 2: Rheologische Eigenschaften der vulkanisierbaren Zusammensetzungen (Prüfverfahren RPA)**

| **Beispiel** | **1*** | **2*** | **3*** | **4** | **5** | **6*** | **7*** | **8*** | **9*** |
|---|---|---|---|---|---|---|---|---|---|
| **Amplitudenabhängigkeit** Temperatur 60 °C Prüffrequenz 1,00 Hz | | | | | | | | | |
| **Prüfergebnisse für η*** | | | | | | | | | |
| η* (10 %) [Pa s] | 26983 | 39493 | 79791 | 60924 | 85004 | 137826 | 55658 | 87713 | 156138 |
| η* (30%) [Pa s] | 26436 | 38618 | 77513 | 52961 | 74481 | 123518 | 47195 | 74190 | 132076 |
| η* (100 %) [Pa s] | 22261 | 31710 | 59181 | 34351 | 45744 | 65102 | 30142 | 44858 | 70592 |
| η* (10%) bei 60 °C/ η* (100%) bei 60 °C | 1,21 | 1,25 | 1,35 | 1,77 | 1,86 | 2,12 | 1,85 | 1,96 | 2,21 |

| **Beispiel** | **1*** | **2*** | **3*** | **4** | **5** | **6*** | **7*** | **8*** | **9*** |
|---|---|---|---|---|---|---|---|---|---|
| **Temperaturabhängigkeit** Temperatur 130 °C Prüffrequenz 1,00 Hz | | | | | | | | | |
| **Prüfergebnisse für η*** | | | | | | | | | |
| η* (10%) [Pa s] | 1666 | 4905 | 20527 | 4278 | 10069 | 43399 | 11726 | 19297 | 55324 |
| η* (30 %) [Pa s] | 1733 | 4861 | 19954 | 3961 | 9249 | 38770 | 6742 | 13389 | 45397 |
| η* (100%) [Pa s] | 1647 | 4377 | 16871 | 3449 | 7560 | 27522 | 4577 | 9455 | 29857 |
| η* (10%)/η* (100%) | 1,01 | 1,12 | 1,22 | 1,24 | 1,33 | 1,58 | 2,56 | 2,04 | 1,85 |
| η* (10) bei 60°C / η* (10) bei 130°C | 16,20 | 8,05 | 3,89 | 14,24 | 8,44 | 3,18 | 4,75 | 4,55 | 2,82 |

**Tabelle 3: Vulkanisationsmessung**

| **Beispiel** | **1*** | **2*** | **3*** | **4** | **5** | **6*** | **7*** | **8*** | **9*** |
|---|---|---|---|---|---|---|---|---|---|
| **Prüfgröße** | | | | | | | | | |
| Drehmomentminimum [dNm] | 0,02 | 0,08 | 0,63 | 0,02 | 0,10 | 1,14 | 0,20 | 0,47 | 1,37 |
| Drehmomentmaximum [dNm] | 0,5 | 1,1 | 4,4 | 68,5 | 60,9 | 75,1 | 8,8 | 12,2 | 19,6 |
| tan δ vom Endwert | 0,51 | 0,38 | 0,15 | 0,17 | 0,16 | 0,13 | 0,18 | 0,14 | 0,08 |
| Zeitdifferenz T90% -T10% min | 8,0 | 5,9 | 3,2 | 0,8 | 0,8 | 0,9 | 5,9 | 5,2 | 4,5 |

**Tabelle 4: Physikalische Eigenschaften der Vulkanisate erhalten durch Plattenpressung**

| **Beispiel** | **1*** | **2*** | **3*** | **4** | **5** | **6*** | **7*** | **8*** | **9*** |
|---|---|---|---|---|---|---|---|---|---|
| Temperatur 180 °C | | | | | | | | | |
| Zeit 15 min | | | | | | | | | |
| Probekörper: Normstab S2 | | | | | | | | | |
| Zugversuch Stab SR 2 RT | | | | | | | | | |

| **Prüf-Größe** | | | | | | | | | |
|---|---|---|---|---|---|---|---|---|---|
| F [MPa] | 1,3 | 2,2 | 8,7 | 15,9 | 18,3 | 44,8 | 16,6 | 22,8 | 32,5 |
| D [%] | 1058,0 | 875,0 | 745,0 | 152,0 | 130,0 | 245,0 | 276,0 | 272,0 | 238,0 |
| S50 [MPa] | 0,30 | 0,40 | 0,70 | 11,10 | 12,50 | 13,80 | 2,70 | 3,00 | 3,60 |
| S100 [MPa] | 0,30 | 0,40 | 0,80 | 14,00 | 16,50 | 20,20 | 5,50 | 6,60 | 9,60 |

Nur die erfindungsgemäßen Zusammensetzungen 4 und 5 zeigen eine "flüssige" Verarbeitbarkeit bei hohen Temperaturen (130°C) und eine normale kautschukartige Verarbeitbarkeit bei niedrigen Temperaturen (60°C) wie oben beschrieben. Nur die erfindungsgemäßen Zusammensetzungen zeigen exzellente physikalische Eigenschaften wie hoher Modulus, hohe Härte und hohe Festigkeiten bei flüssiger Verarbeitbarkeit unterhalb der Vernetzungstemperatur von 180°C. Nur die erfindungsgemäßen Zusammensetzungen zeigen nach der Vernetzung sehr niedrige tan δ Werte - wie anhand der MDR Messung zu sehen isttrotz extrem hoher Vernetzungsdichten und extrem niedrigerer Verarbeitungsviskositäten.

## Patentansprüche

1. Vernetzbare Zusammensetzungen enthaltend
(1) ein oder mehrere Elastomere, wobei mindestens eines davon Carboxyl- und/oder Carboxylat-Gruppen aufweist,
(2) ein oder mehrere verschiedene Salze der allgemeinen Formel (I)
(R^{y-})_{x/y} M^{x+} (I)
worin
R^{y-} ein α-β-ungesättigtes C₃-C₁₄-Carboxylat darstellt, welches y Carboxylatgruppen enthält,
y die Werte 1, 2, 3, oder 4 darstellen kann,
x 2, 3 oder 4 ist und
M ein zwei-, drei- oder vierwertiges Metall ist und
(3) ein oder mehrere Vernetzer, die als Radikalspender fungieren,
**dadurch gekennzeichnet, dass**
(a) das Elastomer (1) oder, sofern mehrere Elastomere (1) eingesetzt werden, die Mischung aller Elastomere (1) zusammen eine Mooney-Viskosität (ML 1+4 bei 100°C), gemessen gemäß ASTM Norm D 1646, in einem Bereich von 1-35 besitzt und
(b) die vernetzbare Zusammensetzung
(i) eine komplexe Viskosität η* gemessen in einem Rubber Process Analyser (RPA) bei 60°C, 1Hz und einer Amplitude von 10% größer 30.000 Pas besitzt,
(ii) eine amplitudenabhängige Änderung der komplexen Viskosität gemessen im RPA bei 60°C als Verhältnis von η* (bei 1Hz und 10% Amplitude) zu η* (bei 1 Hz und 100% Amplitude) größer 1,4,
(iii) eine temperaturabhängige Änderung der komplexen Viskosität gemessen im RPA als Verhältnis von η* (bei 60°C, 1Hz und 10% Amplitude) zu η* (bei 130°C, 1 Hz und 10% Amplitude) größer 6 und
(iv) eine amplitudenabhängige Änderung der komplexen Viskosität gemessen im RPA bei 130°C als Verhältnis von η* (bei 1Hz und 10% Amplitude) zu η* (bei 1 Hz und 100% Amplitude) kleiner 1,5,
wobei die für die komplexe Viskosität (η*) in allen vorgenannten Fällen (i) -(iv) angegebenen Werte jeweils den mathematischen Betrag der komplexen Viskosität angeben.

2. Vernetzbare Zusammensetzungen gemäß Anspruch 1 enthaltend
(1) 10-94 Gew.% eines oder mehrerer Elastomere, wobei mindestens eines davon Carboxyl- und/oder Carboxylat-Gruppen aufweist,
(2) 5-89 Gew.% eines oder mehrerer Salze der allgemeinen Formel (I)
(R^{y-})_{x/y} M ^{x+} (I)
worin
R^{y-} ein α,β-ungesättigtes C₃-C₁₄-Carboxylat darstellt, welches y Carboxylatgruppen enthält,
y die Werte 1, 2, 3, oder 4 darstellen kann,
x 2, 3 oder 4 ist und
M ein zwei-, drei- oder vierwertiges Metall ist und
(3) 1-20 Gew.% eines oder mehrerer Vernetzer, die als Radikalspender fungieren,
wobei die Summe der Komponenten (1), (2) und (3) kleiner gleich 100 Gew.% ergibt,
**dadurch gekennzeichnet, dass**
(a) das Elastomer (1) oder, sofern mehrere Elastomere (1) eingesetzt werden, die Mischung aller Elastomere (1) zusammen eine Mooney-Viskosität (ML 1+4 bei 100°C), gemessen gemäß ASTM Norm D 1646, in einem Bereich von 1-35 besitzt und
(b) die vernetzbare Zusammensetzung
(i) eine **komplexe Viskosität** η* gemessen in einem Rubber Process Analyser (RPA) bei 60°C, 1Hz und einer Amplitude von 10% größer 30.000 Pas besitzt,
(ii) eine **amplitudenabhängige Änderung der komplexen Viskosität** gemessen im RPA bei 60°C als Verhältnis von η* (bei 1Hz und 10% Amplitude) zu η* (bei 1 Hz und 100% Amplitude) größer 1,4,
(iii) eine **temperaturabhängige Änderung der komplexen Viskosität** gemessen im RPA als Verhältnis von η* (bei 60°C, 1Hz und 10% Amplitude) zu η* (bei 130°C, 1 Hz und 10% Amplitude) größer 6 und
(iv) eine **amplitudenabhängige Änderung der komplexen Viskosität** gemessen im RPA bei 130°C als Verhältnis von η* (bei 1Hz und 10% Amplitude) zu η* (bei 1 Hz und 100% Amplitude) kleiner 1,5,
wobei die für die komplexe Viskosität (η*) in allen vorgenannten Fällen (i) - (iv) angegebenen Werte jeweils den mathematischen Betrag der komplexen Viskosität angeben.

3. Vernetzbare Zusammensetzungen gemäß Anspruch 1 enthaltend
(1) 30-84 Gew.% eines oder mehrerer Elastomere, wobei mindestens eines davon Carboxyl- und/oder Carboxylat-Gruppen aufweist,
(2) 14-68 Gew.% eines oder mehrerer Salze der allgemeinen Formel (I)
(R^{y-})_{x/y} M^{x+} (I)
worin
R^{y-} ein α,β-ungesättigtes C₃-C₁₄-Carboxylat darstellt, welches y Carboxylatgruppen enthält,
y die Werte 1, 2, 3, oder 4 darstellen kann,
x 2, 3 oder 4 ist und
M ein zwei-, drei- oder vierwertiges Metall ist und
(3) 2-15 Gew.% eines oder mehrerer Vernetzer, die als Radikalspender fungieren,
wobei die Summe der Komponenten (1), (2) und (3) kleiner gleich 100 Gew.% ergibt,
**dadurch gekennzeichnet, dass**
(a) das Elastomer (1) oder, sofern mehrere Elastomere (1) eingesetzt werden, die Mischung aller Elastomere (1) zusammen eine Mooney-Viskosität (ML 1+4 bei 100°C), gemessen gemäß ASTM Norm D 1646, in einem Bereich von 1-35 besitzt und
(b) die vernetzbare Zusammensetzung
(i) eine **komplexe Viskosität** η* gemessen in einem Rubber Process Analyser (RPA) bei 60°C, 1Hz und einer Amplitude von 10% größer 30.000 Pas besitzt,
(ii) eine **amplitudenabhängige Änderung der komplexen Viskosität** gemessen im RPA bei 60°C als Verhältnis von η* (bei 1Hz und 10% Amplitude) zu η* (bei 1 Hz und 100% Amplitude) größer 1,4,
(iii) eine **temperaturabhängige Änderung der komplexen Viskosität** gemessen im RPA als Verhältnis von η* (bei 60°C, 1Hz und 10% Amplitude) zu η* (bei 130°C, 1 Hz und 10% Amplitude) größer 6 und
(iv) eine **amplitudenabhängige Änderung der komplexen Viskosität** gemessen im RPA bei 130°C als Verhältnis vorn η* (bei 1Hz und 10% Amplitude) zu η* (bei 1 Hz und 100% Amplitude) kleiner 1,5,
wobei die für die komplexe Viskosität (η*) in allen vorgenannten Fällen (i) - (iv) angegebenen Werte jeweils den mathematischen Betrag der komplexen Viskosität angeben.

4. Vernetzbare Zusammensetzungen gemäß einem oder mehreren der Ansprüche 1-3, **dadurch gekennzeichnet, dass** die Zusammensetzungen als Komponente (4) bis zu 84 Gew.%, bevorzugt 4-64 Gew.% und besonders bevorzugt 10-40 Gew.% ein oder mehrerer weiterer Hilfsstoffe enthalten, bevorzugt Füllstoffe, Fasern, Polymere, die nicht unter die Definition der Elastomeren (1) in Anspruch 1 fallen, Öle, Stabilisatoren, Verarbeitungshilfsmittel, Weichmacher, zusätzliche polymerisierbare Monomere, Dimere, Trimere oder Oligomere, oder Vulkanisationsaktivatoren enthalten, wobei die Summe der Komponenten (1), (2), (3) und (4) 100 Gew.% ergibt.

5. Vernetzbare Zusammensetzungen gemäß einem oder mehreren der Ansprüche 1 bis 4, **dadurch gekennzeichnet, dass** sie
(i) eine **komplexe Viskosität** η* gemessen in einem Rubber Process Analyser (RPA) bei 60°C, 1Hz und einer Amplitude von 10% von größer 30.000 Pas, bevorzugt von größer 40.000 Pas besitzen,
(ii) eine **amplitndenabhängige Änderung der komplexen Viskosität** gemessen im RPA bei 60°C als Verhältnis von η* (bei 1Hz und 10% Amplitude) zu η* (bei 1 Hz und 100% Amplitude) von größer 1,4, bevorzugt von größer 1,6,
(iii) eine **temperaturabhängige Änderung der komplexen Viskosität** gemessen im RPA als Verhältnis von η* (bei 60°C, 1Hz und 10% Amplitude) zu η* (bei 130°C, 1 Hz und 10% Amplitude) von größer 6, bevorzugt von größer 8, und
(iv) eine **amplitudenabhängige Änderung der komplexen Viskosität** gemessen im RPA bei 130°C als Verhältnis von η* (bei 1Hz und 10% Amplitude) zu η* (bei 1 Hz und 100% Amplitude) von kleiner 1,5, bevorzugt von kleiner 1,4,
wobei die für die komplexe Viskosität (η*) in allen vorgenannten Fällen (i) - (iv) angegebenen Werte jeweils den mathematischen Betrag der komplexen Viskosität angeben.

6. Vernetzbare Zusammensetzung gemäß einem oder mehreren der Ansprüche 1 bis 5, wobei das Elastomer (1) bzw. die gesamte Mischung der Elastomere (1), sofern mehrere Elastomere (1) eingesetzt werden, 0,5-15 Gew. %, bevorzugt 0,5-10 Gew. %, besonders bevorzugt 1 - 7 Gew.% und insbesondere 1,5-6 Gew.%, bezogen auf 100 Gew.% des Elastomers (1) bzw. bezogen auf die gesamte Mischung der Elastomere (1), sofern mehrere Elastomere (1) eingesetzt werden, gebundener Carboxyl- und/oder Carboxylat-Gruppen aufweist.

7. Vernetzbare Zusammensetzung gemäß einem oder mehreren der Ansprüche 1 bis 6, wobei als Carboxyl- und/oder Carboxylatgruppen-haltige Elastomere (1)
1. Carboxylierter Nitrilkautschuk (auch als XNBR abgekürzt),
2. Hydrierter, carboxylierter Nitrilkautschuk (auch als HXNBR abgekürzt),
3. Maleinsäureanhydrid ("MAH") gepfropfte Kautschuke auf Basis von EPM, EPDM, HNBR, EVA, EVM, SBR, NR oder BR,
4. Carboxylierter Styrol-Butadienkautschuk (auch als XSBR abgekürzt),
5. AEM mit freien Carboxylgruppen oder
6. ACM mit freien Carboxylgruppen
sowie beliebige Mischungen der zuvor genannten Polymere eingesetzt werden.

8. Vernetzbare Zusammensetzungen gemäß einem oder mehreren der Ansprüche 1-7, wobei die Mooney-Viskosität (ML 1+4 gemessen bei 100°C), gemessen gemäß ASTM Norm D 1646, des eingesetzten Elastomers (1) oder, sofern mehrere Elastomere (1) eingesetzt werden, der Mischung aller Elastomere (1) in einem Bereich von 2 bis 25, bevorzugt 5 bis 20 liegt.

9. Vernetzbare Zusammensetzung gemäß einem oder mehreren der Ansprüche 1-8, wobei als Komponente (1) ein carboxylierter Nitrilkautschuk (XNBR) eingesetzt wird, bei dem es sich um ein Terpolymer aus mindestens einem α,β-ungesättigten Nitril, mindestens einem konjugierten Dien und mindestens einem Carboxyl- und/oder Carboxylat-Gruppen enthaltenden weiteren Termonomeren handelt.

10. Vernetzbare Zusammensetzung gemäß einem oder mehrere der Ansprüche 1-9, wobei als Komponente (1) ein carboxylierter Nitrilkautschuk (XNBR) eingesetzt wird, bei dem es sich um Polymere aus Butadien und Acrylnitril und Acrylsäure und/oder Methacrylsäure und/oder Fumarsäure und/oder Maleinsäure und/oder den Methyl-, Ethyl-, Propyl-, Isopropyl-, n-Butyl, iso-Butyl-, n-Hexyl-, 2-Ethylhexyl-Halbestem von Fumarsäure und/oder Maleinsäure und/oder den Methyl-, Ethyl-, Propyl-, Isopropyl-,n-Butyl-, iso-Butyl-, n-Hexyl-, 2-Ethylhexyl-Estern von Acrylsäure und/oder Methacrylsäure handelt.

11. Vernetzbare Zusammensetzung gemäß einem oder mehreren der Ansprüche 1-10, wobei als Komponente (1) ein carboxylierter Nitrilkautschuk (XNBR) eingesetzt wird, bei dem es sich um Polymere aus Butadien und Acrylnitril und einem CarboxylGruppen enthaltenden Monomer, inbesondere Fumarsäure, Maleinsäure, Acrylsäure oder Methacrylsäure, und einem Carboxylat-Gruppen enthaltenden Monomer, inbesondere dem Methyl-, Ethyl-, Propyl-, Isopropyl-, n-Butyl, iso-Butyl-, n-Hexyl- oder 2-Ethylhexyl-Halbester von Fumarsäure oder Maleinsäure oder dem Methyl-, Ethyl-, Propyl-, Isopropyl-, n-Butyl-, iso-Butyl-, n-Hexyl- oder 2-Ethylhexyl-Ester von Acrylsäure oder Methacrylsäure handelt.

12. Vernetzbare Zusammensetzung gemäß einem oder mehreren der Ansprüche 1-11, wobei als Komponente (1) ein hydrierter carboxylierter Nitrilkautschuk (auch als HXNBR abgekürzt) eingesetzt wird.

13. Vernetzbare Zusammensetzung gemäß einem oder mehreren der Ansprüche 1-12, wobei als Komponente (1) ein hydrierter carboxylierter Nitrilkautschuk eingesetzt wird, der durch Hydrierung der carboxylierten Nitrilkautschuke gemäß einem oder mehreren der Ansprüche 9-11 erhältlich ist.

14. Vernetzbare Zusammensetzung gemäß einem oder mehreren der Ansprüche 1-13, wobei als Komponente (1) neben ein oder mehreren Elastomeren (1), die Carboxyl- und/oder Carboxylat-Gruppen aufweisen, noch weitere Elastomere (1) eingesetzt werden, die keine Carboxyl- oder Carboxylat-Gruppen aufweisen.

15. Vernetzbare Zusammensetzung gemäß Anspruch 14, wobei als Komponente (1) NBR und HNBR eingesetzt werden.

16. Vernetzbare Zusammensetzung gemäß einem oder mehreren der Ansprüche 1-15, wobei als Komponente (2) ein oder mehrere Salze der allgemeinen Formel (I) eingesetzt werden,
(R^{y-})_{x/y} M^{x+} (I)
worin
R^{y-} ein α-β ungesättigtes C₃-C₁₄-Carboxylat darstellt, welches y Carboxylatgruppen enthält,
y die Werte 1, 2, 3, oder 4 darstellen kann,
x 2, 3 oder 4 ist und
M ein zwei-, drei- oder vierwertiges Metall ist und für Mg, Ca, Zn, Fe, Al, Ti, Pb, B, Sc, Yt, Sn oder Hf steht.

17. Vernetzbare Zusammensetzung gemäß einem oder mehreren der Ansprüche 1-16, wobei in Komponente (2) der Rest R^{y-} in der allgemeinen Formel (I) ein α,β-ungesättigtes C₃-C₈-Carboxylat darstellt, welches y Carboxylatgruppen enthält, wobei y den Wert 1, 2, 3 oder 4 annehmen kann und R^{y-} in der allgemeinen Formel (I) bevorzugt für Acrylat, Methacrylat, Crotonat, Isocrotonat, Sorbinat, Fumarat oder Maleinat oder Mischungen daraus steht.

18. Vernetzbare Zusammensetzung gemäß einem oder mehreren der Ansprüche 1-17, wobei als Komponente (3) ein oder mehrere Vernetzer in Form von Peroxidverbindungen, Aziden, Photoinitiatoren, Redoxinitiatoren oder Mischungen der vorgenannten eingesetzt werden.

19. Vernetzbare Zusammensetzung gemäß einem oder mehreren der Ansprüche 1-18, wobei als Komponente (3) Peroxidverbindungen ausgewählt aus der folgenden Gruppe eingesetzt werden: Bis-(2,4-dichlorbenzoyl)-peroxid, Dibenzoylperoxid, Bis-(4-chlorbenzoyl)peroxid, 1,1-Bis-(t-butylperoxy)-3,3,5-trimethylcylohexan, tert-Butylperbenzoat, 2,2-Bis-(t-butylperoxy)-buten, 4,4-Di-tert.butylperoxynonylvalerat, Dicumylperoxid, 2,5-Dimethyl-2,5-di-(t-butylperoxy)-hexan, tert-Butylcumylperoxid, 1,3-Bis-(t-butylperoxyisopropyl)-benzol, Di-t-butylperoxid, 2,5-Dimethyl-2,5-di(t-butylperoxy)-hexin, t-Butylhydroperoxid, Wasserstoffperoxid, Methylethylketonperoxid, Lauroylperoxid, Decanoylperoxid, 3,5,5-Trimethylhexanoyl-peroxid, Di-(2-ethylhexyl)-peroxydicarbonat, Poly(tert-butyl peroxycarbonat), Ethyl-3,3-di (tert-butylperoxy)-butyrat, Ethyl-3,3-di-(tert-amylperoxy)-butyrat, n-Butyl-4,4-di-(tert-butylperoxy)-valerat, 2,2-Di-(tert-butylperoxy)-butan, 1,1-Di-(tert-butylperoxy)-cyclohexan, 3,3,5-Trimethylcyclohexan, 1,1-Di-(tert-amylperoxy)cyclohexan, tert-Butyl-peroxybenzoat, tert.-Butyl-peroxyacetat, tert.-Butyl-peroxy-3,5,5-trimethylhexanoat, tert.-Butyl peroxyisobutyrat, tert.-Butyl-peroxy-2-ethylhexanoat, tert.-Butyl-peroxypivalat, tert.-Amyl peroxypivalat, tert.-Butyl-peroxyneodecanoat, Cumyl-peroxyneodecanoat, 3-Hydroxy-1,1- di-methylbutyl-peroxyneodecanoat, tert-Butyl-peroxybenzoat, tert.-Butyl-peroxyacetat, tert.-Amyl-peroxy-3,5,5-trimethylhexanoat, tert.-Butyl-peroxyisobutyrat, tert.-Butyl-peroxy-2- ethylhexanoat, Cumyl-peroxyneodecanoat, 3-Hydroxy-1,1-di-methylbutyl-peroxy-neodecanoat, 2,5-Dimethyl-2,5-di-(tert.-butylperoxy)-hexyn-(3-di-tert.-amyl)-peroxid, 2,5-Dimethyl-2,5-di-(tert.-butylperoxy)-hexan, tert.-Amyl-hydroperoxid, Cumolhydroperoxid, 2,5-Dimethyl-2,5-di-(hydroperoxy)-hexan, Diisopropylbenzol-monohydroperoxid und Kaliumperoxodisulfat.

20. Vernetzbare Zusammensetzung gemäß einem oder mehreren der Ansprüche 1-18, wobei als Komponente (3) 2,2-Azobismethylethylacetonitril als Azid eingesetzt wird.

21. Vernetzbare Zusammensetzung gemäß einem oder mehreren der Ansprüche 1-18, wobei als Komponente (3) ein Photoinitiator aus der folgenden Gruppe ausgewählt wird: Benzoin, Benzoin methyl ether, Benzoin ethyl ether, Benzoin isopropyl ether, Benzoin n-butyl ether, Benzoin isobutyl ether, Benzoylphenylcarbinol, Methylphenylglyoxylat, 4,4'-Diazidobiphenyl, 4,4'-Diazidobenzophenon, 4,4'-Diazido-biphenyloxid, 4,4'-Diazido- disulfonylbiphenyl, Azidobenzol, 4-Azidobenzoesäure, 1,2-Bis(4-azidophenyl)ethylen, 4-Aminophenyl-4'-azidophenylmethan, 2,6-Di-(4'-azidobenzal)cyclohexanon, Natrium-4,4'-diazidostilben-2,2'-disulfonat, Benzophenon, Benzophenoneoxim, Acetophenon, Bromoacetophenon, Cyclohexanon, Diphenylmonosulfid, Dibenzothiazolyldisulfid, s-Acyl-dithiocarbamat, m,m'-Azoxystyrol, Benzildimethylketal, 4-Methylbenzophenon, 4-Phenylbenzophenon, Ethyl-4-dimethylaminobenzoat (EPD), 2-Hydroxy-2-methylphenyl-propan-1-on, Isopropylthioxanthon (ITX) und 2-Methyl-1-(4-methylthiophenyl)-2-morpholinopropan-1-on.

22. Vernetzbare Zusammensetzung gemäß einem oder mehreren der Ansprüche 1-18, wobei als Komponente (3) ein Redoxinitiator aus der folgenden Gruppe ausgewählt wird: Fe (II)/Hydroperoxid, Peroxid/tert. Amin, Peroxodisulfat/Thiosulfat, Hydroperoxid/Thiosulfat.

23. Verfahren zur Herstellung der vernetzbaren Zusammensetzungen gemäß einem oder mehreren der Ansprüche 1-22, indem man alle Komponenten (1)-(3) und gegebenenfalls (4) mischt.

24. Verfahren zur Herstellung von vernetzten Elastomeren, von denen mindestens eines Carboxyl- und/oder Carboxylat-Gruppen aufweist, indem man die vernetzbare Zusammensetzung gemäß einem oder mehreren der Ansprüche 1-22 einem Energieeintrag, bevorzugt in Form von thermischer Energie oder Strahlungsenergie unterwirft.

25. Vernetzte Elastomere erhältlich durch das Verfahren gemäß Anspruch 24.

26. Verwendung der vernetzbaren Zusammensetzungen gemäß einem oder mehreren der Ansprüche 1-22 als elastische Klebmassen, als Imprägniermassen, zur Herstellung von Riemen, bevorzugt von Zahnriemen oder Antriebsriemen, zur Herstellung von Walzendecken, von thermoplastischen Vulkanisaten oder von Formteilen.

## Claims

1. Crosslinkable compositions containing
(1) one or more elastomers, at least one thereof having carboxyl and/or carboxylate groups
(2) one or more different salts of the general formula (I)
(R^{y-})_{x/y}M ^{x+} (I)
in which
R^{y-} represents an α,β-unsaturated C₃-C₁₄-carboxylate which contains y carboxylate groups,
y may represent the values 1, 2, 3 or 4,
x is 2, 3 or 4 and
M is a divalent, trivalent or tetravalent metal, and
(3) one or more crosslinking agents which act as free radical donors,
**characterized in that**
(a) the elastomer (1) or, if a plurality of elastomers (1) is used, the mixture of all elastomers (1) together has a Mooney viscosity (ML 1+4 at 100°C), measured according to ASTM standard D 1646, in a range of 1-35 and
(b) the crosslinkable composition
(i) has a complex viscosity η*, measured in a Rubber Process Analyser (RPA) at 60°C, 1 Hz and an amplitude of 10%, of greater than 30 000 Pas,
(ii) an amplitude-dependent change of the complex viscosity, measured in the RPA at 60°C as the ratio of η* (at 1 Hz and 10% amplitude) to η* (at 1 Hz and 100% amplitude), of greater than 1.4,
(iii) a temperature-dependent change of the complex viscosity, measured in the RPA as the ratio of η* (at 60°C, 1 Hz and 10% amplitude) to η* (at 130°C, 1Hz and 10% amplitude), of greater than 6 and
(iv) an amplitude-dependent change of the complex viscosity, measured in the RPA at 130°C as the ratio of η* (at 1 Hz and 10% amplitude) to η* (at 1 Hz and 100% amplitude), of less than 1.5,
the values stated for the complex viscosity (η*) in all abovementioned cases (i)-(iv) indicating in each case the mathematical magnitude of the complex viscosity.

2. Crosslinkable compositions according to Claim 1 containing
(1) 10-94% by weight of one or more elastomers, at least one thereof having carboxyl and/or carboxylate groups,
(2) 5-89% by weight of one or more salts of the general formula (I)
(R^{y-})_{x/y} M ^{x+} (I)
in which
R^{y-} represents an α-β-unsaturated C₃-C₁₄-carboxylate which contains y carboxylate groups,
y may represent the values 1, 2, 3 or 4,
x is 2, 3 or 4 and
M is a divalent, trivalent or tetravalent metal, and
(3) 1-20% by weight of one or more crosslinking agents which act as free radical donors,
the sum of the components (1), (2) and (3) being less than or equal to 100% by weight,
**characterized in that**
(a) the elastomer (1) or, if a plurality of elastomers (1) is used, the mixture of all elastomers (1) together has a Mooney viscosity (ML 1+4 at 100°C), measured according to ASTM standard D 1646, in a range of 1-35 and
(b) the crosslinkable composition
(i) has a **complex viscosity** η*, measured in a Rubber Process Analyser (RPA) at 60°C, 1 Hz and an amplitude of 10%, of greater than 30 000 Pas,
(ii) an **amplitude-dependent change of the complex viscosity**, measured in the RPA at 60°C as the ratio of η* (at 1Hz and 10% amplitude) to η* (at 1Hz and 100% amplitude), of greater than 1.4,
(iii) a **temperature-dependent change of the complex viscosity**, measured in the RPA as the ratio of η* (at 60°C, 1Hz and 10% amplitude) to η* (at 130°C, 1Hz and 10% amplitude), of greater than 6, and
(iv) an **amplitude-dependent change of the complex viscosity** , measured in the RPA at 130°C as the ratio of η* (at 1 Hz and 10% amplitude) to η* (at 1 Hz and 100% amplitude), of less than 1.5,
the values stated for the complex viscosity (η*) in all abovementioned cases (i)-(iv) indicating in each case the mathematical magnitude of the complex viscosity.

3. Crosslinkable compositions according to Claim 1 containing
(1) 30-84% by weight of one or more elastomers, at least one thereof having carboxyl and/or carboxylate groups,
(2) 14-68% by weight of one or more salts of the general formula (I)
(R^{y-})_{x/y} M ^{x+} (I)
in which
R^{y-} represents an α-β-unsaturated C₃-C₁₄-carboxylate which contains y carboxylate groups,
y may represent the values 1, 2, 3 or 4,
x is 2, 3 or 4 and
M is a divalent, trivalent or tetravalent metal, and
(3) 2-15% by weight of one or more crosslinking agents which act as free radical donors,
the sum of the components (1), (2) and (3) being less than or equal to 100% by weight,
**characterized in that**
(a) the elastomer (1) or, if a plurality of elastomers (1) is used, the mixture of all elastomers (1) together has a Mooney viscosity (ML 1+4 at 100°C), measured according to ASTM standard D 1646, in a range of 1-35 and
(b) the crosslinkable composition
(i) has a **complex viscosity** η*, measured in a Rubber Process Analyser (RPA) at 60°C, 1 Hz and an amplitude of 10%, of greater than 30 000 Pas,
(ii) an **amplitude-dependent change of the complex viscosity**, measured in the RPA at 60°C as the ratio of η* (at 1Hz and 10% amplitude) to η* (at 1Hz and 100% amplitude), of greater than 1.4,
(iii) a **temperature-dependent change of the complex** **viscosity**, measured in the RPA as the ratio of η* (at 60°C, 1Hz and 10% amplitude) to η* (at 130°C, 1Hz and 10% amplitude), of greater than 6, and
(iv) an **amplitude-dependent change of the complex** **viscosity**, measured in the RPA at 130°C as the ratio of η* (at 1 Hz and 10% amplitude) to η* (at 1 Hz and 100% amplitude), of less than 1.5,
the values stated for the complex viscosity (η*) in all abovementioned cases (i)-(iv) indicating in each case the mathematical magnitude of the complex viscosity.

4. Crosslinkable compositions according to one or more of Claims 1-3, **characterized in that** the compositions contain, as component (4), up to 84% by weight, preferably 4-64% by weight and particularly preferably 10-40% by weight of one or more further auxiliaries, preferably contain fillers, fibres, polymers which are not covered by the definition of the elastomers (1) in Claim 1, oils, stabilizers, processing auxiliaries, plasticizers, additional polymerizable monomers, dimers, trimers or oligomers, or vulcanization activators, the sum of the components (1), (2), (3) and (4) being 100% by weight.

5. Crosslinkable compositions according to one or more of Claims 1 to 4, **characterized in that** they
(i) have a **complex viscosity** η*, measured in a Rubber Process Analyser (RPA) at 60°C, 1 Hz and an amplitude of 10%, of greater than 30 000 Pas, preferably of greater than 40 000 Pas,
(ii) an **amplitude-dependent change of the complex viscosity,** measured in the RPA at 60°C as the ratio of η* (at 1 Hz and 10% amplitude) to η* (at 1 Hz and 100% amplitude), of greater than 1.4, preferably of greater than 1.6,
(iii) a **temperature-dependent change of the complex viscosity**, measured in the RPA as the ratio of η* (at 60°C, 1 Hz and 10% amplitude) to η* (at 130°C, 1 Hz and 10% amplitude), of greater than 6, preferably of greater than 8, and
(iv) an **amplitude-dependent change of the complex viscosity**, measured in the RPA at 130°C as the ratio of η* (at 1 Hz and 10% amplitude) to η* (at 1 Hz and 100% amplitude), of less than 1.5, preferably of less than 1.4,
the values stated for the complex viscosity (η*) in all abovementioned cases (i)-(iv) indicating in each case the mathematical magnitude of the complex viscosity.

6. Crosslinkable composition according to one or more of Claims 1 to 5, the elastomer (1) or the total mixture of the elastomers (1), if a plurality of elastomers (1) is used, having 0.5-15% by weight, preferably 0.5-10% by weight, particularly preferably 1-7% by weight and in particular 1.5-6% by weight, based on 100% by weight of the elastomer (1) or based on the total mixture of the elastomers (1), if a plurality of elastomers (1) is used, of bonded carboxyl and/or carboxylate groups.

7. Crosslinkable composition according to one or more of Claims 1 to 6,
1. Carboxylated nitrile rubber (also abbreviated to XNBR),
2. Hydrogenated, carboxylated nitrile rubber (also abbreviated to HXNBR),
3. Maleic anhydride ("MAH")-grafted rubbers based on EPM, EPDM, HNBR, EVA, EVM, SBR, NR or BR,
4. Carboxylated styrene-butadiene rubber (also abbreviated to XSBR),
5. AEM having free carboxyl groups, or
6. ACM having free carboxyl groups
and any desired mixtures of the abovementioned polymers being used as elastomers (1) containing carboxyl and/or carboxylate groups.

8. Crosslinkable compositions according to one or more of Claims 1-7, the Mooney viscosity (ML 1+4, measured at 100°C), measured according to ASTM standard D 1646, of the elastomer (1) used or, if a plurality of elastomers (1) is used, of the mixture of all elastomers (1) being in a range of 2 to 25, preferably 5 to 20.

9. Crosslinkable composition according to one or more of Claims 1-8, a carboxylated nitrile rubber (XNBR) which is a terpolymer of at least one α-β-unsaturated nitrile, at least one conjugated diene and at least one further termonomer containing carboxyl and/or carboxylate groups being used as component (1).

10. Crosslinkable composition according to one or more of Claims 1-9, a carboxylated nitrile rubber (XNBR) which comprises polymers of butadiene and acrylonitrile and acrylic acid and/or methacrylic acid and/or fumaric acid and/or maleic acid and/or the methyl, ethyl, propyl, isopropyl, n-butyl, isobutyl, n-hexyl or 2-ethylhexyl monoesters of fumaric acid and/or maleic acid and/or the methyl, ethyl, propyl, isopropyl, n-butyl, isobutyl, n-hexyl or 2-ethylhexyl esters of acrylic acid and/or methacrylic acid being used as component (1).

11. Crosslinkable composition according to one or more of Claims 1-10, a carboxylated nitrile rubber (XNBR) which comprises polymers of butadiene and acrylonitrile and a monomer containing carboxyl groups, in particular fumaric acid, maleic acid, acrylic acid or methacrylic acid, and a monomer containing carboxylate groups, in particular the methyl, ethyl, propyl, isopropyl, n-butyl, isobutyl, n-hexyl or 2-ethylhexyl monoester of fumaric acid or maleic acid or the methyl, ethyl, propyl, isopropyl, n-butyl, isobutyl, n-hexyl or 2-ethylhexyl ester of acrylic acid or methacrylic acid being used as component (1).

12. Crosslinkable composition according to one or more of Claims 1-11, a hydrogenated carboxylated nitrile rubber (also abbreviated to HXNBR) being used as component (1).

13. Crosslinkable composition according to one or more of Claims 1-12, a hydrogenated carboxylated nitrile rubber which is obtainable by hydrogenation of the carboxylated nitrile rubbers according to one or more of Claims 9-11 being used as component (1).

14. Crosslinkable composition according to one or more of Claims 1-13, further elastomers (1) which have no carboxyl and/or carboxylate groups being used as component (1), in addition to one or more elastomers (1) which have carboxyl and/or carboxylate groups.

15. Crosslinkable composition according to Claim 14, NBR and HNBR being used as component (1).

16. Crosslinkable composition according to one or more of Claims 1-15, one or more salts of the general formula (I)
(R^{y-})_{x/y} M ^{x+} (I)
in which
R^{y-} represents an α-β-unsaturated C₃-C₁₄-carboxylate which contains y carboxylate groups,
y may represent the values 1, 2, 3 or 4,
x is 2, 3 or 4 and
M is a divalent, trivalent or tetravalent metal and represents Mg, Ca, Zn, Fe, Al, Ti, Pb, B, Sc, Yt, Sn or Hf,
being used as component (2).

17. Crosslinkable composition according to one or more of Claims 1-16, in component (2) the radical R^{y-} in the general formula (I) representing an α-β-unsaturated C₃-C₈-carboxylate which contains y carboxylate groups, it being possible for y to assume the value 1, 2, 3 or 4 and R^{y}- in the general formula (I) preferably representing acrylate, methacrylate, crotonate, isocrotonate, sorbate, fumarate or maleate or mixtures thereof.

18. Crosslinkable composition according to one or more of Claims 1-17, one or more crosslinking agents in the form of peroxide compounds, azides, photoinitiators, redox initiators or mixtures of the abovementioned being used as component (3).

19. Crosslinkable composition according to one or more of Claims 1-18, peroxide compounds selected from the following group being used as component (3): bis(2,4-dichlorobenzoyl) peroxide, dibenzoyl peroxide, bis(4-chlorobenzoyl) peroxide, 1,1-bis(t-butylperoxy)-3,3,5-trimethylcyclohexane, tert-butyl perbenzoate, 2,2-bis(tert-butylperoxy)butene, 4,4-di-tert-butylperoxynonyl valerate, dicumyl peroxide, 2,5-dimethyl-2,5-di(tert-butylperoxy)hexane, tert-butyl cumyl peroxide, 1,3-bis(tert-butylperoxyisopropyl)benzene, di-tert-butyl peroxide, 2,5-dimethyl-2,5-di(tert-butylperoxy)hexyne, tert-butyl hydroperoxide, hydrogen peroxide, methyl ethyl ketone peroxide, lauroyl peroxide, decanoyl peroxide, 3,5,5-trimethylhexanoyl peroxide, di(2-ethylhexyl) peroxydicarbonate, poly(tert-butyl peroxycarbonate), ethyl 3,3-di(tert-butylperoxy)butyrate, ethyl 3,3-di(tert-amylperoxy)butyrate, n-butyl 4,4-di(tert-butylperoxy)valerate, 2,2-di(tert-butylperoxy)butane, 1,1-di(tert-butylperoxy)cyclohexane, 3,3,5-trimethylcyclohexane, 1,1-di(tert-amylperoxy)cyclohexane, tert-butyl peroxybenzoate, tert-butyl peroxyacetate, tert-butyl peroxy-3,5,5-trimethylhexanoate, tert-butyl peroxyisobutyrate, tert-butyl peroxy-2-ethylhexanoate, tert-butyl peroxypivalate, tert-amyl peroxypivalate, tert-butyl peroxyneodecanoate, cumyl peroxyneodecanoate, 3-hydroxy-l 1 -dimethylbutyl peroxyneodecanoate, tert-butyl peroxybenzoate, tert-butyl peroxyacetate, tert-amyl peroxy-3,5,5-trimethylhexanoate, tert-butyl peroxyisobutyrate, tert-butyl peroxy-2-ethylhexanoate, cumyl peroxyneodecanoate, 3-hydroxy-1,1-dimethylbutyl peroxyneodecanoate, 2,5-dimethyl-2,5-di(tert-butylperoxy)hexyne (3-di-tert-amyl) peroxide, 2,5-dimethyl-2,5-di(tert-butylperoxy)hexane, tert-amyl hydroperoxide, cumol hydroperoxide, 2,5-dimethyl-2,5-di(hydroperoxy)hexane, diisopropylbenzene monohydroperoxide and potassium peroxodisulphate.

20. Crosslinkable composition according to one or more of Claims 1-18, 2,2-azobismethylethylacetonitrile as an azide being used as component (3).

21. Crosslinkable composition according to one or more of Claims 1-18, a photoinitiator from the following group being chosen as component (3): benzoin, benzoin methyl ether, benzoin ethyl ether, benzoin isopropyl ether, benzoin n-butyl ether, benzoin isobutyl ether, benzoylphenylcarbinol, methylphenyl glyoxylate, 4,4'-diazidobiphenyl, 4,4'-diazidobenzophenone, 4,4'-diazidobiphenyl oxide, 4,4'-diazido- disulphonylbiphenyl, azidobenzene, 4-azidobenzoic acid, 1,2-bis(4-azidophenyl)ethylene, 4-aminophenyl-4'-azidophenylmethane, 2,6-di(4'-azidobenzal)cyclohexanone, sodium 4,4'-diazidostilbene-2,2'-disulphonate, benzophenone, benzophenone oxime, acetophenone, bromoacetophenone, cyclohexanone, diphenyl monosulphide, dibenzothiazolyl disulphide, s-acyl dithiocarbamate, m,m'-azoxystyrene, benzyl dimethyl ketal, 4-methylbenzophenone, 4-phenylbenzophenone, ethyl 4-dimethylaminobenzoate (EPD), 2-hydroxy-2-methylphenylpropan-lone, isopropylthioxanthone (ITX) and 2-methyl-1-(4-methylthiophenyl)-2-morpholinopropan-1-one.

22. Crosslinkable composition according to one or more of Claims 1-18, a redox initiator from the following group being chosen as component (3): Fe(II)/hydroperoxide, peroxide/tertiary amine, peroxodisulphate/thiosulphate, hydroperoxide/thiosulphate.

23. Process for the preparation of the crosslinkable compositions according to one or more of Claims 1-22, by mixing all components (1)-(3) and optionally (4).

24. Process for the preparation of crosslinked elastomers, at least one of which has carboxyl and/or carboxylate groups, by subjecting the crosslinkable composition according to one or more of Claims 1-22 to energy input, preferably in the form of thermal energy or radiation energy.

25. Crosslinked elastomers obtainable by the process according to Claim 24.

26. Use of the crosslinkable compositions according to one or more of Claims 1-22 as elastic adhesive materials, as impregnating materials, for the production of belts, preferably of toothed belts or drive belts, or for the production of roll covers, of thermoplastic vulcanizates or of shaped articles.

## Revendications

1. Compositions réticulables contenant
(1) un ou plusieurs élastomères, dont au moins un présente des groupes carboxyle et/ou carboxylate,
(2) un ou plusieurs sels différents de formule générale (I)
(R^{y-}) _{x/y}M^{x+} (I)
où
R^{y-} représente un C₃-C₁₄-carboxylate α,ß-6-insaturé, qui contient y groupe(s) carboxylate,
y peut représenter les valeurs 1, 2, 3, ou 4,
x vaut 2, 3 ou 4 et
M représente un métal divalent, trivalent ou tétravalent et
(3) un ou plusieurs réticulants, qui agissent comme distributeurs de radicaux,
**caractérisées en ce que**
(a) l'élastomère (1) ou, lorsqu'on utilise plusieurs élastomères (1), le mélange de tous les élastomères (1) présente ensemble une viscosité de Mooney (ML 1+4 à 100°C), mesurée selon la norme ASTM D 1646, dans une plage de 1-35 et
(b) la composition réticulable
(i) présente une viscosité complexe η* mesurée dans un dispositif d'analyse du traitement du caoutchouc (Rubber Process Analyser - RPA) à 60°C, 1 Hz et une amplitude de 10% supérieure à 30 000 Pa.s,
(ii) présente une modification dépendant de l'amplitude de la viscosité complexe mesurée dans un RPA à 60°C comme rapport de η* (à 1 Hz et une amplitude de 10%) à η* (à 1 Hz et une amplitude de 100%) supérieure à 1,4,
(iii) présente une modification dépendant de la température de la viscosité complexe mesurée dans un RPA comme rapport de η* (à 60°C, 1 Hz et une amplitude de 10%) à η* (à 130°C, 1 Hz et une amplitude de 10%) supérieure à 6 et
(iv) présente une modification dépendant de l'amplitude de la viscosité complexe mesurée dans un RPA à 130°C comme rapport de η* (à 1 Hz et une amplitude de 10%) à η* (à 1 Hz et une amplitude de 100%) inférieure à 1,5,
où les valeurs indiquées pour la viscosité complexe (η*) dans tous les cas ci-dessus (i)-(iv) indiquent à chaque fois la contribution mathématique de la viscosité complexe.

2. Compositions réticulables selon la revendication 1, contenant
(1) 10-94% en poids d'un ou de plusieurs élastomères, dont au moins un présente des groupes carboxyle et/ou carboxylate,
(2) 5-89% en poids d'un ou de plusieurs sels de formule générale (I)
( R^{y-})_{x/y}M^{x+} (I)
où
R^{y-} représente un C₃-C₁₄-carboxylate α,β-insaturé, qui contient y groupe(s) carboxylate,
y peut représenter les valeurs 1, 2, 3, ou 4,
x vaut 2, 3 ou 4 et
M représente un métal divalent, trivalent ou tétravalent et
(3) 1-20% en poids d'un ou de plusieurs réticulants, qui agissent comme distributeurs de radicaux,
où la somme des composants (1), (2) et (3) est inférieure à 100% en poids,
**caractérisées en ce que**
(a) l'élastomère (1) ou, lorsqu'on utilise plusieurs élastomères (1), le mélange de tous les élastomères (1) présente ensemble une viscosité de Mooney (ML 1+4 à 100°C), mesurée selon la norme ASTM D 1646, dans une plage de 1-35 et
(b) la composition réticulable
(i) présente une viscosité complexe η* mesurée dans un RPA (Rubber Process Analyser) à 60°C, 1Hz et une amplitude de 10% supérieure à 30 000 Pa.s,
(ii) présente une modification dépendant de l'amplitude de la viscosité complexe mesurée dans un RPA à 60°C comme rapport de η* (à 1 Hz et une amplitude de 10%) à η* (à 1 Hz et une amplitude de 100%) supérieure à 1,4,
(iii) présente une modification dépendant de la température de la viscosité complexe mesurée dans un RPA comme rapport de η* (à 60°C, 1 Hz et une amplitude de 10%) à η* (à 130°C, 1 Hz et une amplitude de 10%) supérieure à 6 et
(iv) présente une modification dépendant de l'amplitude de la viscosité complexe mesurée dans un RPA à 130°C comme rapport de η* (à 1 Hz et une amplitude de 10%) à η* (à 1 Hz et une amplitude de 100%) inférieure à 1,5,
où les valeurs indiquées pour la viscosité complexe (η*) dans tous les cas ci-dessus (i) - (iv) indiquent à chaque fois la contribution mathématique de la viscosité complexe.

3. Compositions réticulables selon la revendication 1, contenant
(1) 30-84% en poids d'un ou de plusieurs élastomères, dont au moins un présente des groupes carboxyle et/ou carboxylate,
(2) 14-68% en poids d'un ou de plusieurs sels de formule générale (I)
(R^{y-})_{x/y}M^{x+} (I)
où
R^{y-} représente un C₃-C₁₄-carboxylate α,β-insaturé, qui contient y groupe(s) carboxylate,
y peut représenter les valeurs 1, 2, 3, ou 4,
x vaut 2, 3 ou 4 et
M représente un métal divalent, trivalent ou tétravalent et
(3) 2-15% en poids d'un ou de plusieurs réticulants, qui agissent comme distributeurs de radicaux,
où la somme des composants (1), (2) et (3) est inférieure à 100% en poids,
**caractérisées en ce que**
(a) l'élastomère (1) ou, lorsqu'on utilise plusieurs élastomères (1), le mélange de tous les élastomères (1) présente ensemble une viscosité de Mooney (ML 1+4 à 100°C), mesurée selon la norme ASTM D 1646, dans une plage de 1-35 et
(b) la composition réticulable
(i) présente une viscosité complexe η* mesurée dans un RPA (Rubber Process Analyser) à 60°C, 1 Hz et une amplitude de 10% supérieure à 30 000 Pa.s,
(ii) présente une modification dépendant de l'amplitude de la viscosité complexe mesurée dans un RPA à 60°C comme rapport de η* (à 1 Hz et une amplitude de 10%) à η* (à 1 Hz et une amplitude de 100%) supérieure à 1,4,
(iii) présente une modification dépendant de la température de la viscosité complexe mesurée dans un RPA comme rapport de η* (à 60°C, 1 Hz et une amplitude de 10%) à η* (à 130°C, 1 Hz et une amplitude de 10%) supérieure à 6 et
(iv) présente une modification dépendant de l'amplitude de la viscosité complexe mesurée dans un RPA à 130°C comme rapport de η* (à 1 Hz et une amplitude de 10%) à η* (à 1 Hz et une amplitude de 100%) inférieure à 1,5,
où les valeurs indiquées pour la viscosité complexe (η*) dans tous les cas ci-dessus (i)-(iv) indiquent à chaque fois la contribution mathématique de la viscosité complexe.

4. Compositions réticulables selon l'une ou plusieurs des revendications 1 à 3, **caractérisées en ce que** les compositions contiennent, comme composant (4) jusqu'à 84% en poids, de préférence 4-64% en poids et de manière particulièrement préférée 10-40% en poids d'un ou de plusieurs autres adjuvants, de préférence des charges, des fibres, des polymères, qui ne relèvent pas de la définition des élastomères (1) dans la revendication 1, des huiles, des stabilisateurs, des adjuvants de transformation, des plastifiants, des monomères, dimères, trimères ou oligomères polymérisables supplémentaires ou des activateurs de vulcanisation, la somme des composants (1), (2), (3) et (4) étant de 100% en poids.

5. Compositions réticulables selon l'une ou plusieurs des revendications 1 à 4, **caractérisées en ce qu'**elles présentent
(i) une viscosité complexe η* mesurée dans un RPA (Rubber Process Analyser) à 60°C, 1 Hz et une amplitude de 10% supérieure à 30 000 Pa.s, de préférence supérieure à 40 000 Pa.s,
(ii) une modification dépendant de l'amplitude de la viscosité complexe mesurée dans un RPA à 60°C comme rapport de η* (à 1 Hz et une amplitude de 10%) à η* (à 1Hz et une amplitude de 100%) supérieure à 1,4, de préférence supérieure à 1,6,
(iii) une modification dépendant de la température de la viscosité complexe mesurée dans un RPA comme rapport de η* (à 60°C, 1 Hz et une amplitude de 10%) à η* (à 130°C, 1 Hz et une amplitude de 10%) supérieure à 6, de préférence supérieure à 8, et
(iv) une modification dépendant de l'amplitude de la viscosité complexe mesurée dans un RPA à 130°C comme rapport de η* (à 1 Hz et une amplitude de 10%) à η* (à 1 Hz et une amplitude de 100%) inférieure à 1,5, de préférence inférieure à 1,4,
où les valeurs indiquées pour la viscosité complexe (η*) dans tous les cas ci-dessus (i)-(iv) indiquent à chaque fois la contribution mathématique de la viscosité complexe.

6. Composition réticulable selon l'une ou plusieurs des revendications 1 à 5, où l'élastomère (1) ou le mélange total des élastomères (1), lorsqu'on utilise plusieurs élastomères (1), représente 0,5-15% en poids, de préférence 0,5-10% en poids, de manière particulièrement préférée 1-7% en poids et en particulier 1,5-6% en poids, par rapport à 100% en poids de l'élastomère (1) ou par rapport au mélange total des élastomères (1), lorsqu'on utilise plusieurs élastomères (1), de groupes carboxyle et/ou carboxylate liés.

7. Composition réticulable selon l'une ou plusieurs des revendications 1 à 6, où on utilise comme élastomères (1) contenant des groupes carboxyle et/ou carboxylate (1)
1. du caoutchouc de nitrile carboxylé (également XNBR en abrégé),
2. du caoutchouc de nitrile carboxylé, hydrogéné (également HXNBR en abrégé),
3. des caoutchoucs greffés par de l'anhydride de l'acide maléique ("MAH") à base d'EPM, d'EPDM, de HNBR, d'EVA, d'EVM, de SBR, de NR ou de BR,
4. du caoutchouc de styrène-butadiène carboxylé (également XSBR en abrégé),
5. de l'AEM avec des groupes carboxyle libres ou
6. de l'ACM avec des groupes carboxyle libres
ainsi que des mélanges quelconques des polymères susmentionnés.

8. Compositions réticulables selon l'une ou plusieurs des revendications 1-7, où la viscosité de Mooney (ML 1+4 mesurée à 100°C), mesurée selon la norme ASTM D 1646, de l'élastomère (1) utilisé ou, lorsqu'on utilise plusieurs élastomères (1), du mélange de tous les élastomères (1), est située dans une plage de 2 à 25, de préférence de 5 à 20.

9. Composition réticulable selon l'une ou plusieurs des revendications 1-8, où on utilise comme composant (1) un caoutchouc de nitrile carboxylé (XNBR), pour lequel il s'agit d'un terpolymère constitué par au moins un nitrile α,β-insaturé, au moins un diène conjugué et au moins un autre termonomère contenant des groupes carboxyle et/ou carboxylate.

10. Composition réticulable selon l'une ou plusieurs des revendications 1-9, où on utilise comme composant (1) un caoutchouc de nitrile carboxylé (XNBR), pour lequel il s'agit de polymères de butadiène et d'acrylonitrile et d'acide acrylique et/ou d'acide méthacrylique et/ou d'acide fumarique et/ou d'acide maléique et/ou du semi-ester méthylique, éthylique, propylique, isopropylique, n-butylique, isobutylique, n-hexylique, 2-éthylhexylique de l'acide fumarique et/ou maléique et/ou de l'ester méthylique, éthylique, propylique, isopropylique, n-butylique, isobutylique, n-hexylique, 2-éthylhexylique de l'acide acrylique et/ou méthacrylique.

11. Composition réticulable selon l'une ou plusieurs des revendications 1-10, où on utilise comme composant (1) un caoutchouc de nitrile carboxylé (XNBR), où il s'agit de polymères de butadiène et d'acrylonitrile et d'un monomère contenant des groupes carboxyle, en particulier l'acide fumarique, l'acide maléique, l'acide acrylique ou l'acide méthacrylique et d'un monomère contenant des groupes carboxylate, en particulier le semi-ester méthylique, éthylique, propylique, isopropylique, n-butylique, isobutylique, n-hexylique ou 2-éthylhexylique de l'acide fumarique ou maléique ou l'ester méthylique, éthylique, propylique, isopropylique, n-butylique, isobutylique, n-hexylique ou 2-éthylhexylique de l'acide acrylique ou méthacrylique.

12. Composition réticulable selon l'une ou plusieurs des revendications 1-11, où on utilise comme composant (1) un caoutchouc de nitrile carboxylé hydrogéné (également HXNBR en abrégé).

13. Composition réticulable selon l'une ou plusieurs des revendications 1-12, où on utilise comme composant (1) un caoutchouc de nitrile carboxylé hydrogéné qui peut être obtenu par hydrogénation des caoutchoucs de nitrile carboxylés selon l'une ou plusieurs des revendications 9-11.

14. Composition réticulable selon l'une ou plusieurs des revendications 1-13, où on utilise comme composant (1), outre un ou plusieurs élastomères (1), qui présentent des groupes carboxyle et/ou carboxylate, encore d'autres élastomères (1), qui ne présentent pas de groupes carboxyle ou carboxylate.

15. Composition réticulable selon la revendication 14, où on utilise comme composant (1) du NBR et du HNBR.

16. Composition réticulable selon l'une ou plusieurs des revendications 1-15, où on utilise comme composant (2) un ou plusieurs sels de formule générale (I)
(R^{y-})_{x/y}M^{x+} (I)
où
R^{y-} représente un C₃-C₁₄-carboxylate α,β-insaturé, qui contient y groupe(s) carboxylate,
y peut représenter les valeurs 1, 2, 3, ou 4,
x vaut 2, 3 ou 4 et
M représente un métal divalent, trivalent ou tétravalent et représente Mg, Ca, Zn, Fe, Al, Ti, Pb, B, Sc, Yt, Sn ou Hf.

17. Composition réticulable selon l'une ou plusieurs des revendications 1-16, où, dans le composant (2), le radical R^{y-} dans la formule générale (I) représente un C₃-C₈-carboxylate α,β-insaturé, qui contient y groupe(s) carboxylate, où y peut prendre la valeur 1, 2, 3 ou 4 et R^{y-} dans la formule générale (I) représente de préférence acrylate, méthacrylate, crotonate, isocrotonate, sorbinate, fumarate ou maléinate ou leurs mélanges.

18. Composition réticulable selon l'une ou plusieurs des revendications 1-17, où on utilise comme composant (3) un ou plusieurs réticulants sous forme de composés peroxyde, d'azides, de photo-initiateurs, d'initiateurs redox ou leurs mélanges.

19. Composition réticulable selon l'une ou plusieurs des revendications 1-18, où on utilise comme composant (3) des composés peroxydes choisis dans le groupe suivant : peroxyde de bis-(2,4-dichlorobenzoyle), peroxyde de dibenzoyle, peroxyde de bis-(4-chlorobenzoyle), 1,1-bis-(t-butylperoxy)-3,3,5-triméthylcyclohexane, perbenzoate de tert-butyle, 2,2-bis-(t-butylperoxy)-butène, valérate de 4,4-di-tert-butylperoxynonyle, peroxyde de dicumyle, 2,5-diméthyl-2,5-di-(t-butylperoxy)-hexane, peroxyde de tert-butylcumyle, 1,3-bis-(t-butylperoxyisopropyl)-benzène, peroxyde de di-t-butyle, 2,5-diméthyl-2,5-di(t-butylperoxy)-hexyne, hydroperoxyde de t-butyle, peroxyde d'hydrogène, peroxyde de méthyléthylcétone, peroxyde de lauroyle, peroxyde de décanoyle, peroxyde de 3,5,5-triméthylhexanoyle, di-(2-éthylhexyl)-peroxydicarbonate, poly(tert-butyl-peroxycarbonate), 3,3-di(tert-butylperoxy)-butyrate d'éthyle, 3,3-di-(tert-amylperoxy)-butyrate d'éthyle, 4,4-di-(tert-butylperoxy)-valérate de n-butyle, 2,2-di-(tert-butylperoxy)-butane, 1,1-di-(tert-butylperoxy)-cyclohexane, 3,3,5-triméthylcyclohexane, 1,1-di-(tert-amylperoxy)cyclohexane, peroxybenzoate de tert-butyle, peroxyacétate de tert-butyle, peroxy-3,5,5-triméthylhexanoate de tert-butyle, peroxyisobutyrate de tert-butyle, peroxy-2-éthylhexanoate de tert-butyle, peroxypivalate de tert-butyle, peroxypivalate de tert-amyle, peroxynéodécanoate de tert-butyle, peroxynéodécanoate de cumyle, peroxynéodécanoate de 3-hydroxy-1,1-diméthylbutyle, peroxybenzoate de tert-butyle, peroxyacétate de tert-butyle, peroxy-3,5,5-triméthylhexanoate de tert-amyle, peroxyisobutyrate de tert-butyle, peroxy-2-éthylhexanoate de tert-butyle, peroxynéodécanoate de cumyle, peroxynéodécanoate de 3-hydroxy-1,1-diméthylbutyle, peroxyde de 2,5-diméthyl-2,5-di-(tert-butylperoxy)-hexyn-(3-di-tert-amyle), 2,5-diméthyl-2,5-di-(tert-butylperoxy)-hexane, hydroperoxyde de tert-amyle, hydroperoxyde de cumène, 2,5-diméthyl-2,5-di-(hydroperoxy)-hexane, benzènemonohydroperoxyde de diisopropyle et peroxodisulfate de potassium.

20. Composition réticulable selon l'une ou plusieurs des revendications 1-18, où on utilise comme composant (3) du 2,2-azobisméthyléthylacétonitrile comme azide.

21. Composition réticulable selon l'une ou plusieurs des revendications 1-18, où on utilise comme composant (3) un photo-initiateur choisi dans le groupe suivant : benzoïne, benzoïneméthyléther, benzoïnéthyléther, benzoïnisopropyléther, benzoïne-n-butyléther, benzoïnisobutyléther, benzoylphénylcarbinol, méthylphénylglyoxylate, 4,4'-diazidobiphényle, 4,4'-diazidobenzophénone, oxyde de 4,4'-diazidobiphényle, 4,4'-diazidodisulfonylbiphényle, azidobenzène, acide 4-azidobenzoïque, 1,2-bis(4-azidophényl)éthylène, 4-aminophényl-4'-azidophénylméthane, 2,6-di-(4'-azidobenzal)cyclohexanone, 4,4'-diazidostilbène-2,2'-disulfonate de sodium, benzophénone, benzophénonoxime, acétophénone, bromoacétophénone, cyclohexanone, monosulfure de diphényle, disulfure de dibenzothiazolyle, S-acyldithiocarbamate, m,m'-azoxystyrène, benzyldiméthylcétal, 4-méthylbenzophénone, 4-phénylbenzophénone, 4-diméthylaminobenzoate d'éthyle (EPD), 2-hydroxy-2-méthylphénylpropan-1-one, isopropylthioxanthone (ITX) et 2-méthyl-1-(4-méthylthiophényl)-2-morpholinopropan-1-one.

22. Composition réticulable selon l'une ou plusieurs des revendications 1-18, où on utilise comme composant (3) un initiateur redox choisi dans le groupe suivant : Fe (II)/hydroperoxyde, peroxyde/tert-amine, peroxodisulfate/thiosulfate, hydroperoxyde/thiosulfate.

23. Procédé pour la préparation des compositions réticulables selon l'une ou plusieurs des revendications 1-22, en ce qu'on mélange tous les composants (1) - (3) et le cas échéant (4).

24. Procédé pour la préparation d'élastomères réticulés, dont au moins un présente des groupes carboxyle et/ou carboxylate, en ce qu'on soumet la composition réticulable selon l'une ou plusieurs des revendications 1-22 à une introduction d'énergie, de préférence sous forme d'énergie thermique ou de rayonnement.

25. Elastomères réticulés pouvant être obtenus par le procédé selon la revendication 24.

26. Utilisation des compositions réticulables selon l'une ou plusieurs des revendications 1-22 comme masses adhésives élastiques, comme masses d'imprégnation, pour la production de courroies, de préférence de courroies dentées ou de courroies d'entraînement, pour la production de recouvrements de cylindres, de produits de vulcanisation thermoplastiques ou de corps façonnés.
